# EUROPEAN PATENT SPECIFICATION

(11) **EP 3 598 528 B1**
(45) Date of publication and mention of the grant of the patent: **12.06.2024**
(21) Application number: 18767933.7
(22) Date of filing: 08.03.2018
(51) Int. Cl.: C08F 297/04, C08K 3/22, C08L 53/02, H01M 50/46, H01M 10/056, H01M 10/058

(54) **COMPOSITION FOR NON-AQUEOUS SECONDARY BATTERY FUNCTIONAL LAYER, FUNCTIONAL LAYER FOR NON-AQUEOUS SECONDARY BATTERY, NON-AQUEOUS SECONDARY BATTERY, AND METHOD OF MANUFACTURING THE NON-AQUEOUS SECONDARY BATTERY**
ZUSAMMENSETZUNG FÜR WASSERFREIE SEKUNDÄRBATTERIE-FUNKTIONSSCHICHT, FUNKTIONSSCHICHT FÜR WASSERFREIE SEKUNDÄRBATTERIE, WASSERFREIE SEKUNDÄRBATTERIE UND VERFAHREN ZUR HERSTELLUNG DER WASSERFREIEN SEKUNDÄRBATTERIE
COMPOSITION POUR LA COUCHE FONCTIONNELLE D'UNE BATTERIE SECONDAIRE NON AQUEUSE, COUCHE FONCTIONNELLE POUR BATTERIE SECONDAIRE NON AQUEUSE, BATTERIE SECONDAIRE NON AQUEUSE ET MÉTHODE DE FABRICATION DE LA BATTERIE SECONDAIRE NON AQUEUSE

(30) Priority: 17.03.2017 JP 2017053349
(43) Date of publication of application: 22.01.2020
(73) Proprietor: Zeon Corporation, Tokyo 100-8246 (JP)
(72) Inventor: SEKIMOTO Takafumi, Tokyo 100-8246 (JP)
(74) Representative: Maiwald GmbH
(86) International application number: PCT/JP2018/009086
(87) International publication number: WO 2018/168661

(56) References cited:
- EP-A1- 3 598 545
- JP-A- 2014 011 019
- JP-A- 2014 149 936
- JP-A- 2015 078 348
- JP-A- 2017 048 368

## Description

### TECHNICAL FIELD

This invention relates to a composition for a non-aqueous secondary battery functional layer (hereinafter, also referred to as 'non-aqueous secondary battery functional layer composition'), a functional layer for a non-aqueous secondary battery (hereinafter, also referred to as 'non-aqueous secondary battery functional layer'), a non-aqueous secondary battery, and a method of manufacturing the non-aqueous secondary battery.

### BACKGROUND

Non-aqueous secondary batteries (hereinafter may simply be referred to as 'secondary batteries') such as lithium ion secondary batteries are compact and light in weight, high in energy density, and capable of repeated cycles of charge and discharge, and thus used in a wide variety of applications. A non-aqueous secondary battery typically includes battery members such as a positive electrode, a negative electrode, and a separator that isolates the positive electrode and the negative electrode from each other and prevents short circuiting therebetween. Further, a secondary battery generally includes: a battery member assembly formed by arranging the aforementioned battery members; and an electrolyte solution, which are hermetically accommodated in a casing.

Here, secondary batteries use functional layers to impart the battery members with desired performances such as, for example, electrolyte solution retainability and adhesiveness, to thereby improve the secondary battery performance. Specifically, the secondary battery may use battery members such as a functional layer-equipped separator obtained by forming a functional layer on a separator substrate, or a functional layer-equipped electrode obtained by forming a functional layer on an electrode substrate formed with an electrode mixed material layer disposed on a current collector. Accordingly, functional layers have been extensively improved in recent years, aiming to further improve the performance of secondary batteries.

For example, the technology disclosed in PTL 1 uses a porous film-equipped negative electrode that includes a predetermined porous film disposed as a functional layer on a negative electrode mixed material layer of the negative electrode, to thereby improve the secondary battery performance. Specifically, the aforementioned predetermined porous film of PTL 1 is formed by using a porous film slurry as a mixture of a block polymer of styrene-butyl acrylate, N-methyl-2-pyrrolidone, and aluminum oxide so as to impart the battery members with proper electrolyte solution retainability, to thereby improve the output characteristics and the cycle characteristics of the secondary battery.
PTL 2 describes a separator for a secondary battery comprising an organic separator, a heat-resistant layer formed adjacent to at least one surface of the organic separator, nonconductive particles and a binder.
PTL 3 describes a binder for a secondary battery comprising an acid-modified unit-containing block copolymer hydride obtained by acid-modifying a block copolymer hydride obtained by hydrogenating 90% or more of a block polymer (A) mainly composed of a repeating unit derived from an aromatic vinyl compound and a block polymer (B) mainly composed of a repeating unit derived from a conjugated diene compound.

### CITATION LIST

### Patent Literature

PTL 1: JP5598472B
PTL 2: JP 2014-149936 A
PTL 3: JP 2014-11019 A

### SUMMARY

### (Technical Problem)

However, further improvement has been needed for the secondary battery including the aforementioned conventional porous film-equipped negative electrode, in terms of: ensuring more favorable adhesiveness among the battery members, such as an electrode and a separator, when laminating the electrode and the separator to manufacture the secondary battery; and also improving the cycle characteristics of the secondary battery.

Here, one conceivable way of ensuring more favorable adhesiveness among the battery members in the process of manufacture is to impart excellent pressure-sensitive adhesiveness to functional layers such as a porous film to be interposed between the electrode and the separator so that the functional layers exhibit higher adhesiveness along with the increase of pressure applied thereto.

On the other hand, in the process of manufacturing secondary batteries, the resultant lengthy battery members are generally wound up for storage and transportation. However, when the battery members such as a functional layer-equipped electrode and a functional layer-equipped separator are wound up for storage and transportation, the members adjacent to one another via the functional layer may stick together or suffer blocking, leading to reduction in productivity. Accordingly, such functional layer-equipped battery members are also required to be capable of excellently suppressing blocking (blocking resistance) during the process of manufacture.

In light of the above, it would be helpful to provide a non-aqueous secondary battery functional layer composition capable of forming a non-aqueous secondary battery functional layer excellent in both pressure-sensitive adhesiveness and blocking resistance as well as imparting the secondary battery with excellent cycle characteristics.

It would also be helpful to provide a non-aqueous secondary battery functional layer capable of achieving both excellent pressure-sensitive adhesiveness and blocking resistance as well as imparting the secondary battery with excellent cycle characteristics.

It would further be helpful to provide: a non-aqueous secondary battery excellent in cycle characteristics; and a method of manufacturing a non-aqueous secondary battery capable of manufacturing the aforementioned secondary battery.

### (Solution to Problem)

Diligent investigation has been conducted to solve the problems set forth above. Through this investigation, it has been discovered, in forming a functional layer using a functional layer composition including a polymer and a solvent, that the formed functional layer has excellent pressure-sensitive adhesiveness and blocking resistance when the polymer has a predetermined component and a diblock content falling within a predetermined range. It has also been discovered that a secondary battery provided with the aforementioned functional layer exhibits excellent cycle characteristics. These discoveries have led to the present invention.

The composition for a non-aqueous secondary battery functional layer according to the present invention comprises: a polymer; inorganic particles; and a solvent, in which: the polymer is a block copolymer including an aromatic vinyl monomer unit and an aliphatic conjugated diene monomer unit; and the polymer has a diblock content of 5 mass% or more and 85 mass% or less. The functional layer composition comprising a polymer and a solvent, the polymer being a block copolymer containing an aromatic vinyl monomer unit and an aliphatic conjugated diene monomer unit and having a diblock content falling within the aforementioned predetermined range, allows a functional layer formed by using the aforementioned functional layer composition to be excellent in both pressure-sensitive adhesiveness and blocking resistance. Further, a secondary battery having a functional layer formed by using the aforementioned functional layer composition exhibits excellent cycle characteristics.

The phrase "contain a monomer unit" as used herein means that "a polymer obtained using the monomer contains a structural unit derived from the monomer". Further, the block copolymer has a consecutive-block region including consecutive blocks of aromatic vinyl monomers and aliphatic conjugated diene monomers, and the term "diblock content" as used herein refers to the ratio (mass%) of the consecutive-block region to the entire polymer. Further, in this disclosure, the "diblock content" may be obtained, for example, according to the methods described in Examples disclosed herein, using high-performance liquid chromatography.

Here, in the composition for a non-aqueous secondary battery functional layer, the polymer preferably contains the aromatic vinyl monomer units in a proportion of 10 mass% or more and 70 mass% or less for the following reasons. The proportion of the aromatic vinyl monomer units contained in the polymer falling within the aforementioned range allows the functional layer formed by using the functional layer composition to have more favorable pressure-sensitive adhesiveness as well as blocking resistance. Further, a secondary battery using the functional layer formed by using the functional layer composition is further improved in cycle characteristics.

The "proportion of the aromatic vinyl monomer units" contained in the polymer as disclosed herein can be measured using nuclear magnetic resonance (NMR) such as ¹H-NMR.

Further, the composition for a non-aqueous secondary battery functional layer preferably contains the aliphatic conjugated diene monomer units in a proportion of 20 mass% or more and 80 mass% or less in the polymer for the following reasons. The proportion of the aliphatic conjugated diene monomer units contained in the polymer falling within the aforementioned range allows a functional layer formed by using the functional layer composition to achieve more excellent pressure-sensitive adhesiveness as well as more excellent blocking resistance. Further, a secondary battery having the functional layer formed by using the functional layer composition is further improved in cycle characteristics.

The "proportion of the aliphatic conjugated diene monomer units" as disclosed herein can be measured according to the same method used for measuring the aforementioned "proportion of the aromatic vinyl monomer units".

Further, the polymer in the composition for a non-aqueous secondary battery functional layer preferably has a weight average molecular weight of 10 × 10⁴ or more and 100 × 10⁴ or less for the following reasons. The weight average molecular weight of the polymer falling within the aforementioned range further improves the functional layer formed by using the functional layer composition in terms of pressure-sensitive adhesiveness, and also ensures excellent adhesiveness (peel strength) between the functional layer and functional layer-equipped battery members when immersed in an electrolyte solution.

The "weight average molecular weight" as disclosed herein may be measured by gel permeation chromatography, and specifically be measured by the method according to Examples disclosed herein.

The composition for a non-aqueous secondary battery functional layer contains inorganic particles for the following reason. The functional layer composition further containing inorganic particles is capable of further improving the blocking resistance of the functional layer formed by using the functional layer composition.

The non-aqueous secondary battery functional layer according to the present invention is formed by using any of the aforementioned non-aqueous secondary battery functional layer compositions according to the present invention. The functional layer formed by using the aforementioned non-aqueous secondary battery functional layer composition is excellent in both pressure-sensitive adhesiveness and blocking resistance, and also allows the secondary battery to exhibit excellent cycle characteristics.

The non-aqueous secondary battery according to the present invention has the aforementioned non-aqueous secondary battery functional layer. A non-aqueous secondary battery having the aforementioned non-aqueous secondary battery functional layer exhibits excellent cycle characteristics.

Here, the non-aqueous secondary battery includes a positive electrode, a negative electrode, a separator, and an electrolyte solution, in which at least one of the positive electrode, the negative electrode, and the separator is preferably equipped with the non-aqueous secondary battery functional layer for the following reasons. The aforementioned non-aqueous secondary battery functional layer provided to at least one of the positive electrode, the negative electrode, and the separator ensures favorable and efficient adhesiveness among the battery members such as the positive electrode, the negative electrode, the separator via the functional layer. Further, when the aforementioned non-aqueous secondary battery functional layer is attached to at least one of the positive electrode, the negative electrode, and the separator, the secondary battery can be manufactured with high productivity without causing blocking among the functional layer-equipped battery members, and the secondary battery exhibits excellent cycle characteristics.

The method of manufacturing a non-aqueous secondary battery according to the present invention is a method of manufacturing the aforementioned non-aqueous secondary battery, the method including the steps of: laminating at least two of the positive electrode, negative electrode, and separator via the functional layer for a non-aqueous secondary battery to obtain a laminate; and pressurizing the laminate. A secondary battery manufactured by laminating at least two of the positive electrode, negative electrode, and separator via the aforementioned functional layer for a non-aqueous secondary battery to form a laminate and by pressurizing the laminate, can ensure favorable and efficient adhesiveness among the battery members via the functional layer, and the secondary battery thus manufactured exhibits excellent cycle characteristics.

Preferably, the method of manufacturing the non-aqueous secondary battery further includes the step of providing the non-aqueous secondary battery functional layer onto a surface of the separator to form a functional layer-equipped separator, in which the functional layer-equipped separator and the positive electrode, and/or the functional layer-equipped separator and the negative electrode are laminated preferably via the non-aqueous secondary battery functional layer for the following reasons. The step of forming a functional layer-equipped separator and laminating the functional layer-equipped separator and electrodes such as a positive electrode and a negative electrode via the functional layer allows for favorable and efficient adhesiveness among the battery members via the functional layer. Further, the step allows for manufacturing a secondary battery with high productivity without causing blocking among the functional layer-equipped battery members, and further allows for providing a secondary battery more excellent in cycle characteristics.

Preferably, the method of manufacturing the non-aqueous secondary battery further includes the step of heating the laminate, in which the step of heating is preferably performed simultaneously with the step of pressurizing and/or after the step of pressurizing for the following reasons. The step of heating additionally performed simultaneously and/or after the step of pressurizing allows for favorable and efficient adhesiveness among the battery members via the functional layers, and further allows for providing a secondary battery more excellent in cycle characteristics.

### (Advantageous Effect)

The present invention can provide a composition for a non-aqueous secondary battery functional layer which allows for forming a non-aqueous secondary battery functional layer that is excellent in both pressure-sensitive adhesiveness and blocking resistance and also imparts the secondary battery with excellent cycle characteristics.

The present invention can also provide a non-aqueous secondary battery functional layer that is capable of achieving both excellent pressure-sensitive adhesiveness and blocking resistance as well as imparting the secondary battery with excellent cycle characteristics.

The present invention can further provide a non-aqueous secondary battery excellent in cycle characteristics and a method of manufacturing the secondary battery.

### DETAILED DESCRIPTION

Embodiments of the present invention will now be described.

The composition for a non-aqueous secondary battery functional layer (hereinafter, also referred to as 'non-aqueous secondary battery functional layer composition') can be used for forming a functional layer for non-aqueous secondary battery (hereinafter, also referred to as 'non-aqueous secondary battery functional layer'). Then, for example, the non-aqueous secondary battery functional layer formed by using the non-aqueous secondary battery functional layer composition may be formed on an electrode mixed material layer (positive electrode mixed material layer, negative electrode mixed material layer) of the electrode substrate (positive electrode substrate, negative electrode substrate) of a non-aqueous secondary battery such as a lithium ion secondary battery, so as to form a functional layer-equipped electrode (functional layer-equipped positive electrode, functional layer-equipped negative electrode) as the battery member, or may be formed on a separator substrate to form a functional layer-equipped separator as the battery member. In addition, for example, the non-aqueous secondary battery functional layer formed by using the non-aqueous secondary battery functional layer composition may serve as a functional layer for ensuring favorable adhesiveness among the respective layers of the outer packaging hermetically accommodating a battery member assembly, for example, in a non-aqueous secondary battery such as a lithium ion secondary battery, so as to form a functional layer-equipped casing.

In particular, in terms of readily improving the blocking resistance of the battery members and adhesiveness between the battery members, the non-aqueous secondary battery functional layer formed by using the non-aqueous secondary battery functional layer composition may particularly be suited for forming the functional layer on a separator substrate to form a functional layer-equipped separator.

The non-aqueous secondary battery has the aforementioned non-aqueous secondary battery functional layer, and is manufactured by the method of manufacturing a non-aqueous secondary battery.

### (Non-Aqueous Secondary Battery Functional Layer Composition)

The non-aqueous secondary battery functional layer composition includes a polymer, inorganic particles, and a solvent, and optionally, further includes additional components that can be blended in a functional layer of a secondary battery. The polymer included in the non-aqueous secondary battery functional layer composition is a block copolymer that contains an aromatic vinyl monomer unit and an aliphatic conjugated diene monomer unit, and optionally contains additional monomer units, and has a diblock content in a range of 5 mass% or more and 85 mass% or less. The non-aqueous secondary battery functional layer composition contains the polymer containing the aforementioned predetermined monomer units and having the aforementioned predetermined diblock content and a solvent, which allows the functional layer formed by using the functional layer composition to be excellent in both pressure-sensitive adhesiveness and blocking resistance. Accordingly, the aforementioned functional layer ensures, for example, favorable and efficient adhesiveness among the battery members, and also favorably suppresses blocking of the functional layer-equipped battery members, which enables highly productive manufacturing of the secondary batteries. Further, the functional layer also imparts excellent cycle characteristics to a secondary battery having the functional layer formed by using the functional layer composition.

### <Polymer>

In the functional layer formed by using the functional layer composition, the polymer functions as an adhesive component for ensuring favorable and efficient adhesiveness, for example, of the functional layer to a battery member and/or between battery members via the functional layer. Here, the polymer is a block copolymer containing an aromatic monomer unit and an aliphatic conjugated diene monomer unit, and generally has an aromatic vinyl monomer block formed of a region having two or more consecutive aromatic vinyl monomer units and an aliphatic conjugated diene monomer block formed of a region having two or more consecutive aliphatic conjugated diene monomer units. The polymer needs to have a diblock content of the consecutive-block regions in a range of 5 mass% or more and 85 mass% or less, the consecutive-block regions including, for example, an aromatic vinyl monomer block-an aliphatic conjugated diene monomer block; or an aromatic vinyl monomer block-an aliphatic conjugated diene monomer block-an aromatic vinyl monomer block. The polymer must have the aforementioned predetermined monomer units and be a block copolymer having the diblock content in the aforementioned predetermined range; otherwise, the functional layer formed by using the functional layer composition fails to achieve both high pressure-sensitive adhesiveness and high blocking resistance and fails to impart the secondary battery having the functional layer formed by using the functional layer composition with excellent cycle characteristics.

### <<Aromatic Vinyl Monomer Unit>>

### [Type]

Examples of the aromatic vinyl monomers which may form the aromatic vinyl monomer unit include styrene, styrenesulfonic acid and the salt thereof, α-methylstyrene, p-t-butylstyrene, butoxystyrene, vinyltoluene, chlorostyrene, and vinyl naphthalene. These aromatic vinyl monomers may each be used alone or in combination of two or more at any ratio. Of these aromatic vinyl monomers, in view of achieving more favorable blocking resistance between the battery members via the functional layer formed by using the functional layer composition, styrene and styrenesulfonic acid sodium salt are preferred, with styrene being more preferred.

### [Proportion (Content Ratio)]

The polymer contains the aromatic vinyl monomer units in a proportion of: preferably 10 mass% or more, more preferably 15 mass% or more, further preferably 16 mass% or more, and particularly preferably 20 mass% or more; and preferably 70 mass% or less, more preferably 67 mass% or less, further preferably 65 mass% or less, and particularly preferably 60 mass% or less, for the following reasons. When the proportion of the aromatic vinyl monomer units contained in the polymer is at least the aforementioned lower limit, the functional layer formed by using the functional layer composition has excellent blocking resistance, and for example, suppresses blocking between battery members such as separators equipped with the functional layers, which allows for highly productive manufacturing of secondary batteries. In addition, when the proportion of the aromatic vinyl monomer units contained in the polymer is at least the aforementioned lower limit, components of the functional layer formed by using the functional layer composition can be suppressed from eluting into an electrolyte solution along with the charging/discharging of the secondary battery, and also the cycle characteristics of a secondary battery having the aforementioned functional layer may further be improved. Further, when the proportion of the aromatic vinyl monomer units contained in the polymer is not greater than the aforementioned upper limit, the functional layer formed by using the functional layer composition is further enhanced in pressure-sensitive adhesiveness, which for example ensures more favorable and efficient adhesiveness among the battery members such as between an electrode and a separator.

### «Aliphatic Conjugated Diene Monomer Unit»

### [Type]

Examples of aliphatic conjugated diene monomers to form the aliphatic conjugated diene monomer unit include 1,3-butadiene, 2-methyl-1,3-butadiene(isoprene), 2,3-dimethyl-1,3-butadiene, 2-ethyl-1,3-butadiene, 1,3-pentadiene, 2-chlor-1,3-butadiene. These aliphatic conjugated diene monomers may each be used alone or in combination or two or more at any ratio. Of these aliphatic conjugated diene monomers, in view of improving pressure-sensitive adhesiveness of the functional layer formed by using the functional layer composition, 1,3-butadiene and isoprene are preferred, with isoprene being more preferred.

### [Proportion (Content Ratio)]

The proportion of aliphatic conjugated diene monomer units contained in the polymer is preferably 20 mass% or more, more preferably 23 mass% or more, further preferably 25 mass% or more, particularly preferably 30 mass% or more, and preferably 80 mass% or less, more preferably 75 mass% or less, further preferably 74 mass% or less, particularly preferably 70 mass% or less. With the proportion of the aliphatic conjugated diene monomer units contained in the polymer being at least the aforementioned lower limit, the functional layer formed by using the functional layer composition has more excellent pressure-sensitive adhesiveness. This is because, for example, the functional layer can exhibit high adhesiveness even when the battery members via the functional layers are simply applied with a relatively low pressure and/or a pressure for a relatively short period of time, with the result that favorable and efficient adhesiveness can be ensured among the battery members such as electrodes and separators via the functional layers. When the content of aliphatic conjugated diene monomer units in the polymer is not greater than the aforementioned upper limit, the functional layer formed by using the functional layer composition has excellent blocking resistance. Accordingly, in the process of manufacturing secondary batteries, when battery members such as a separator equipped with a functional layer (functional layer-equipped separator) are wound up and transported, for example, blocking between the functional layer-equipped separator can favorably be suppressed, to thereby manufacture secondary batteries with high productivity. In addition, when the content of aliphatic conjugated diene monomer units in the polymer is not greater than the aforementioned upper limit, the secondary batteries having the functional layer can further be enhanced in cycle characteristics.

### «Additional Monomer Units»

### [Type]

Examples of monomer units (the additional monomer units) other than the aforementioned aromatic vinyl monomer unit and aliphatic conjugated diene monomer unit which may be optionally contained in the polymer contained in the non-aqueous secondary battery functional layer composition include repeating units derived from known monomers. Specific examples of such additional monomer units include, for example, (meth)acrylic acid ester monomer units and hydrophilic group containing monomer units. These monomers may each be used alone or in combination of two or more at any ratio.

As used herein, the term "(meth)acryl" refers to acryl and/or methacryl.

### -(Meth)acrylic Acid Ester Monomer Unit-

Examples of (meth)acrylic acid ester monomer that may form the (meth)acrylic acid ester monomer unit include: acrylic acid alkyl ester such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethyl hexyl acrylate, nonyl acrylate, decyl acrylate, lauryl acrylate, n-tetradecyl acrylate, stearyl acrylate; and methacrylic acid alkyl ester such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, decyl methacrylate, stearyl methacrylate.

### -Hydrophilic Group-Containing Monomer Unit-

An example of a hydrophilic group-containing monomer that may form the hydrophilic group containing monomer unit includes a polymerizable monomer having a hydrophilic group. Specific examples of the hydrophilic group-containing monomer include, for example, a monomer having a carboxy group, a monomer having a sulfo group, a monomer having a phosphate group, and a monomer having a hydroxyl group.

Examples of the monomer having a carboxy group include: a monocarboxylic acid and the derivative thereof; and dicarboxylic acid and the acid anhydride thereof, and the derivatives thereof. Examples of the monocarboxylic acid include acrylic acid, methacryl acid, and crotonic acid.

Examples of the monocarboxylic acid derivatives include 2-ethylacrylic acid, isocrotonic acid, α-acetoxy acrylic acid, β-trans-aryloxy acrylic acid, α-chloro-β-E-methoxy acrylic acid, and β-diamino acrylic acid.

Examples of the dicarboxylic acids include maleic acid, fumaric acid, and itaconic acid.

Examples of the dicarboxylic acid derivatives include: methyl maleic acid, dimethyl maleic acid, phenyl maleic acid, chloromaleic acid, di-chloromalic acid, and fluoromaleic acid; and a maleic acid ester, such as maleic acid methyl allyl, maleic acid diphenyl, maleic acid nonyl, maleic acid decyl, maleic acid dodecyl, maleic acid octadecyl, and maleic acid fluoroalkyl.

Examples of the acid anhydride of dicarboxylic acid include maleic anhydride, acrylic anhydride, methyl maleic anhydride, and dimethyl maleic anhydride.

Acid anhydride, which generates a carboxylic group through hydrolysis, may also be used as the monomers having a carboxylic acid.

Other examples thereof include a monoester and a diester of α,β-ethylenic unsaturated polybasic carboxylic acid, such as monoethyl maleate, diethyl maleate, monobutyl maleate, dibutyl maleate, monoethyl fumarate, diethyl fumarate, monobutyl fumarate, dibutyl fumarate, mono-cyclohexyl fumarate, di-cyclohexyl fumarate, monoethyl itaconate, diethyl itaconate, monobutyl itaconate, and dibutyl itaconate.

Examples of the monomers having a sulfo group include vinylsulfonic acid, methyl vinylsulfonic acid, (meth)allylsulfonic acid, (meth)acrylic acid-2-sulfonic acid ethyl, 2-acrylamido-2-methylpropanesulfonic acid, and 3-allyloxy-2-hydroxypropanesulfonic acid.

As used herein, the term "(meth)allyl" refers to allyl and/or methallyl.

Examples of the monomers having a phosphate group include phosphoric acid-2-(meth)acryloyloxyethyl, phosphoric acid methyl-2-(meth)acryloyloxyethyl, and phosphoric acid ethyl-(meth)acryloyloxy ethyl.

As used herein, the term "(meth)acryloyl" refers to acryloyl and/or methacryloyl.

Examples of the monomers having a hydroxyl group include: ethylenic unsaturated alcohol such as (meth)allyl alcohol, 3-butene-1-ol, 5-hexene-1-ol; alkanolesters of ethylenic unsaturated carboxylic acid such as acrylic acid-2-hydroxyethyl (2-hydroxyethyl acrylate), acrylic acid-2-hydroxypropyl, methacryl acid-2-hydroxyethyl, methacryl acid-2-hydroxypropyl, maleic acid di-2-hydroxyethyl, maleic acid di-4-hydroxypropyl, itaconic acid di-2-hydroxypropyl; esters with (meth)acrylic acid with polyethylene glycol represented by general formula: CH₂=CR¹-COO-(C_{q}H_{2q}O)ₚ-H (in which p represents an integer of from 2 to 9, q represents an integer of 2 to 4, R¹ represents a hydrogen group or a methyl group); mono(meth)acrylic acid esters of dihydroxy esters of dicarboxylic acid such as 2-hydroxyethyl-2'-(meth)acryloyloxyphthalate, 2-hydroxyethyl-2'-(meth)acryloyloxy succinate; vinyl ethers such as 2-hydroxyethyl vinyl ether, 2-hydroxypropyl vinyl ether; mono(meth)allyl ethers of alkylene glycols such as (meth)allyl-2-hydroxyethylether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, (meth)allyl-6-hydroxyhexylether; polyoxy alkyleneglycol mono(meth)allyl ethers such as diethylene glycol mono(meth)allyl ether, dipropylene glycol mono(meth)allyl ether; mono(meth)allyl ethers of halogen and hydroxy substituents of polyalkylene glycol such as glycerin mono(meth)allyl ether, (meth)allyl-2-chloro-3-hydroxypropyl ether, (meth)allyl-2-hydroxy-3-chrolopropyl ether; mono(meth)allyl ethers of polyhydric phenol such as eugenol, isoeugenol and halogen substituents thereof; and (meth)allylthio ethers of alkylene glycol such as (meth)allyl-2-hydroxyethylthio ether, (meth)allyl-2-hydroxypropylthio ether.

### [Proportion (Content Ratio)]

The proportion of additional polymer units contained in the polymer may be 0 mass%, preferably 5 mass% or more, more preferably 8 mass% or more, and preferably 20 mass% or less, more preferably 15 mass% or less. When the proportion of the additional monomer units is at least the aforementioned lower limit, a functional layer composition including the polymer can be ensured to have viscosity stability. Further, when the proportion of the additional monomer units is not greater than the aforementioned upper limit, a functional layer formed by using the functional layer composition ensures more favorable pressure-sensitive adhesiveness as well as blocking resistance, and also allows a secondary battery having the aforementioned functional layer to exhibit more excellent cycle characteristics.

Here, in general, additional monomers that may form the additional monomer unit are randomly polymerized to form random regions in the polymer, without forming additional monomer blocks.

### <<Preparation of Polymers>>

Polymers may be polymerized by any method including, for example, solution polymerization, suspension polymerization, bulk polymerization, and emulsion polymerization. The polymerization reactions may adopt, for example, addition polymerization such as ionic polymerization, radical polymerization, living radical polymerization.

More specifically, the block copolymer as the polymer can be prepared by, for example: adding, to a solution in which aromatic vinyl monomers as the first monomer component have been polymerized, aliphatic conjugated diene monomers as the second monomer component different from the first monomer component, and polymerizing the solution; and optionally further repeating the addition and polymerization of monomer components such as aromatic vinyl monomers. Here, when the additional monomers are used, the additional monomers may be polymerized, without being particularly limited, after, for example, the first aromatic vinyl monomers, the second aliphatic conjugated diene monomers, and the third aromatic vinyl monomers have each been polymerized.

In terms of preparing a desired block copolymer, the obtained polymer solution is preferably subjected to phase-transfer emulsion using an aqueous solution and the emulsion may be separated thereafter. Here, for example, a known emulsifying disperser may be used for the phase-transfer emulsion. For the separation, for example, a known chromatographic column may be used.

### [Additives]

Examples of additives usable for preparing the polymer include a coupling agent, an emulsifier, a dispersant, a polymerization initiator, and a polymerization auxiliary. Here, any generally-available additives may be used as the additive, in a generally-assumed amount. However, in order to control the diblock content to be described later, for example, the type and proportion of the coupling agent may be regulated as appropriate. Examples of the coupling agent preferably include: tetramethoxysilane, dimethyldichlorosilane, and the mixture thereof.

### [Block Copolymer]

The polymer to be obtained by the aforementioned method is a block copolymer that at least includes the aforementioned aromatic vinyl monomer unit and the aliphatic conjugated diene monomer unit, and has a predetermined diblock content to be described later in detail. With the polymer being the aforementioned predetermined block copolymer, a functional layer to be formed by using the functional layer composition can be excellent in both pressure-sensitive adhesiveness and blocking resistance, and also allows a secondary battery having the functional layer to exhibit excellent cycle characteristics.

The block copolymer has a consecutive-block region, which has, for example: a structure of (A-B)ₙ (where n is an integer of 1 or more) in which a block region (A) and a block region (B) are consecutively formed, the block region (A) including two or more of the aforementioned aromatic vinyl monomer units, the block region (B) including two or more of the aforementioned aliphatic conjugated diene monomer units; a structure of (A-B-A) in which the block region (A), the block region (B), and the block region (A) are consecutively formed; a structure of (B-A-B) in which the block region (B), the block region (A), and the block region (B) are consecutively formed; and a structure (such as, for example, A-B-A-B-A) in which two or more structures selected from the aforementioned structures of (A-B)ₙ, (A-B-A), and (B-A-B) are further consecutively formed. The block copolymer may have two or more of the same or different consecutive-block regions structured by further containing a random region (R) at an arbitrary portion between the aforementioned structures (such as, for example, (A-B)ₙ-R-A-B-A), the random region (R) being formed using one or more arbitrary monomer(s) selected from the aromatic vinyl monomer, the aliphatic conjugated diene monomer, and the additional monomers.

Of those, in terms of balancing at higher levels the high pressure-sensitive adhesiveness and the high blocking resistance of the functional layer, and the favorable cycle characteristics of a secondary battery, the block copolymer preferably includes the consecutive-block region of the aforementioned (A-B)ₙ and/or the consecutive-block region of (A-B-A), and more preferably at least includes the consecutive-block region of (A-B-A).

The monomers to form the monomer units in the block copolymer, and the suitable proportion (content) of each of the monomer units are as described above.

### «Diblock Content»

The polymer (block copolymer) included in the non-aqueous secondary battery functional layer composition needs to have a diblock content in a range of 5 mass% or more and less than 85 mass%. The diblock content in the polymer is preferably 10 mass% or more, more preferably 15 mass% or more, further preferably 23 mass% or more, particularly preferably 33 mass% or more, preferably 80 mass% or less, more preferably 75 mass% or less, and further preferably 65 mass% or less. The diblock content of the polymer needs to be at least the aforementioned lower limit; otherwise, the functional layer formed by using the functional layer composition fails to have sufficient pressure-sensitive adhesiveness. Therefore, in the process of manufacturing a secondary battery for example, sufficiently favorable and efficient adhesiveness among the battery members, such as between an electrode and a separator via a functional layer, is unlikely to be ensured. Meanwhile, the diblock content of the polymer needs to be not greater than the aforementioned upper limit; otherwise, the functional layer formed by using the functional layer composition fails to ensure sufficient blocking resistance, which therefore fails to suppress blocking among the battery members such as a functional layer-equipped separator, making it difficult to achieve highly productive manufacturing of a secondary battery, in the process of manufacturing the secondary battery. Then, the diblock content of the polymer must be within the aforementioned range; otherwise, the secondary battery having the functional layer fails to have sufficiently enhanced cycle characteristics.

The diblock content of the polymer herein may be regulated as appropriate, by adjusting, for example, the conditions such as the type and the addition amount of the coupling agent to be used for preparing the polymer and the coupling reaction time.

Here, the diblock content of the polymer is more specifically described with reference to the aforementioned specific examples of the structures of the block copolymer. The diblock content of the polymer refers to a ratio of the aforementioned consecutive-block regions such as (A-B)ₙ, (A-B-A), (B-A-B), (A-B-A-B-A) that accounts for the entire polymer. When the block copolymer including a random region (R) has, for example, the aforementioned structure of ((A-B)ₙ-R-A-B-A), the diblock content of the polymer refers to the sum of two consecutive-block regions of (A-B)ₙ and (A-B-A) lying across the random region (R).

Further, the block region (A) including two or more aromatic vinyl monomer units and the block region (B) including two or more aliphatic conjugated diene monomer units have a mass ratio (A:B) of: preferably 10:90-80:20, more preferably 15:85-75:25, and further preferably 20:80-65:35 for the following reason. When the block region (A) in the block copolymer has a mass ratio of at least the lower limit, the functional layer formed by using the functional layer composition is improved in blocking performance. In addition, when the block region (A) in the block copolymer has a mass ratio of at least the aforementioned lower limit, components of the functional layer formed by using the functional layer composition can be suppressed from eluting into an electrolyte solution along with the charging/discharging of the secondary battery, and also the cycle characteristics of a secondary battery having the aforementioned functional layer may further be improved. Further, when the block region (B) in the block copolymer has a mass ratio of at least the aforementioned lower limit, the functional layer formed by using the functional layer composition has improved pressure-sensitive adhesiveness.

### <<Weight Average Molecular Weight>>

The weight average molecular weight of the polymer is preferably 10 × 10⁴ or more, more preferably 20 × 10⁴ or more, further preferably 25 × 10⁴ or more, preferably 100 × 10⁴ or less, more preferably 70 × 10⁴ or less, further preferably 50 × 10⁴ or less. When the weight average molecular weight of the polymer is at least the aforementioned lower limit, the functional layer formed by using the functional layer composition exhibits higher adhesiveness, which can ensure favorable adhesiveness between the functional layer and a substrate even when battery members such as: a functional layer-equipped separator including a functional layer formed on a separator substrate; and a functional layer-equipped positive electrode and a functional layer-equipped negative electrode each including a functional layer formed on an electrode substrate, are immersed in an electrolyte solution. When the weight average molecular weight of the polymer is not greater than the aforementioned upper limit, the functional layer formed by using the functional layer composition exhibits higher pressure-sensitive adhesiveness, which allows the functional layer to ensure favorable and efficient adhesiveness between separators and electrodes, for example, in the process of manufacture.

### «Volume Average Particle Diameter»

The volume average particle diameter of the polymer is preferably 0.2 µm or more, more preferably 0.4 µm or more, further preferably 0.7 µm or more, preferably 5 µm or less, more preferably 3 µm or less, and further preferably 2 µm or less. When the volume average particle diameter of the polymer is at least the aforementioned lower limit, the functional layer formed by using the functional layer composition exhibits higher adhesiveness, which can ensure favorable adhesiveness between the functional layer and a substrate even when battery members such as: a functional layer-equipped separator including a functional layer formed on a separator substrate; and a functional layer-equipped positive electrode and a functional layer-equipped negative electrode each including a functional layer formed an electrode substrate, are immersed in an electrolyte solution. When the volume average particle diameter of the polymer is not greater than the aforementioned upper limit, the functional layer formed by using the functional layer composition exhibits higher pressure-sensitive adhesiveness, which allows the functional layer to ensure favorable and efficient adhesiveness between separators and electrodes in, for example, the process of manufacture.

Here, the term "volume average particle diameter" as used herein refers to a particle diameter (D50) obtained at a cumulative volume of 50% calculated from a smaller diameter side, in a particle diameter distribution (volume) measured by a laser diffraction.

### <Solvent>

The non-aqueous secondary battery functional layer composition may include any solvent, without being particularly limited. Preferred examples of the solvent include, in particular, water, NMP (N-methyl-2-pyrrolidone), and acetone. The solvent may be a mixed solution of water and a small amount of an organic solvent, or may be an aqueous solution. The use of water, NMP, and acetone as the solvent allows the functional layer formed by using the functional layer composition to balance at higher levels the excellent pressure-sensitive adhesiveness and the excellent blocking resistance of the functional layer formed by using the functional layer composition, and the higher cycle characteristics of a secondary battery having the functional layer.

### <Additional Components>

Examples of the additional components to be optionally included in the non-aqueous secondary battery functional layer composition include such components as a binder (functional layer binder) other than the aforementioned polymers, a dispersant, and a wetting agent. These additional components are not particularly limited unless the battery reaction is affected, and any known components may be used. The additional components may each be used alone or in combination of two or more at any ratio.

### <<Inorganic Particles>>

Examples of inorganic particles are not particularly limited; for example, any electrochemically stable material that is stably found under the use environment of a non-aqueous secondary battery is preferred. Inorganic particles are generally non-conductive inorganic particles. Examples of the inorganic particles preferred in light of the above include: oxide particles such as aluminum oxide (alumina), aluminum oxide hydrate (boehmite (AlOOH)), gibbsite (Al(OH)₃), silicon oxide, magnesium oxide (magnesia), calcium oxide, titanium oxide (titania), barium titanate (BaTiO₃), ZrO, alumina-silica complex oxide; nitride particles such as aluminum nitride, boron nitride; covalent crystal particles such as silicon, diamond; hardly-soluble ionic crystal particles such as barium sulfate, calcium fluoride, barium fluoride; and clay fine particles such as talc, montmorillonite. These particles may be subjected, as necessary, to elemental substitution, surface treatment, solid solution hardening. Of those, alumina and boehmite are preferred as the inorganic particles in terms of imparting the functional layer formed by using the functional layer composition with more excellent blocking resistance.

Here, the aforementioned exemplary inorganic particles may each be used alone or in combination of two or more.

### [Proportion (Content Ratio)]

The content of polymers per 100 parts by mass of inorganic particles in the non-aqueous secondary battery functional layer composition is preferably 0.1 parts by mass or more, more preferably 0.5 parts by mass or more, further preferably 1 parts by mass or more, furthermore preferably 5 parts by mass or more, and preferably 20 parts by mass or less, more preferably 10 parts by mass or less. When the content of polymers per 100 parts by mass of inorganic particles is at least the aforementioned lower limit, the functional layer formed by using the functional layer composition exhibits higher adhesiveness, which ensures more favorable adhesiveness between the functional layer and substrates such as a separator even when, for example, the functional layer-equipped separator is immersed in an electrolyte solution. In addition, when the content of polymers per 100 parts by mass of inorganic particles is at least the aforementioned lower limit, the functional layer exhibits more higher pressure-sensitive adhesiveness, which for example allows the functional layer to ensure more easy and favorable adhesiveness between an electrode and a separator. Further, when the content of polymers per 100 parts by mass of inorganic particles is not greater than the aforementioned upper limit, the functional layer formed by using the functional layer composition exhibits higher blocking resistance, which hardly causes blocking among the battery members such as the functional layer-equipped separator in the process of manufacturing the secondary battery, allowing for more efficient manufacturing of secondary batteries. In addition, when the content of polymers per 100 parts by mass of inorganic particles is not greater than the aforementioned upper limit, the secondary battery having the aforementioned functional layer may further be improved in cycle characteristics.

### <<Binder>>

Examples of the binders (functional layer binders) that may be optionally added as the additional components include, for example, resins other than the aforementioned polymer (block copolymer), such as, for example, a conjugated diene polymer and an acrylic polymer.

Here, specific examples of the conjugated diene polymer include a styrene-butadiene copolymer (SBR), butadiene rubber (BR), acrylic rubber (NBR) (copolymer including acrylonitrile units and butadiene units), and hydrides thereof.

Further, examples of the acrylic polymer include a polymer including the aforementioned (meth)acrylate ester monomer unit.

These binders may each be used alone or in combination of two or more.

Here, the non-aqueous secondary battery functional layer composition includes the aforementioned predetermined polymer, and thus can exhibit sufficient pressure-sensitive adhesiveness with no further inclusion of the additional binders. Therefore, the content of the binder in the functional layer composition is preferably 5 mass% or less, more preferably 3 mass% or less, or may be 0 mass%. Further, in terms of further improving adhesiveness of the functional layer formed by using the functional layer composition, the content of the binder in the functional layer composition is preferably 0.5 mass% or more, more preferably 1 mass% or more.

### <<Dispersant>>

Examples to be used as the dispersant include polycarbonate dispersants such as sodium polycarbonate and ammonium polycarbonate. In particular, because inorganic particles are used to prepare the functional layer composition, a dispersant is preferably used to favorably disperse the inorganic particles.

The use amount of the dispersant along with the use of inorganic particles is preferably 0.1 parts by mass or more, more preferably 1 parts by mass or more, and preferably 5 parts by mass or less, more preferably 3 parts by mass or less, per 100 parts by mass of the inorganic particles. When the use amount of the dispersant is at least the aforementioned lower limit, the functional layer composition can be sufficiently improved in dispersiveness even although inorganic particles are blended therein. When the use amount of the dispersant is not greater than the aforementioned upper limit, the amount of residual moisture in the functional layer formed by using the functional layer composition can be reduced.

### <<Wetting Agent>>

A known surfactant may be used as the wetting agent, without being particularly limited. In particular, a polyethylene glycol surfactant is preferably used as the wetting agent.

The use amount of the wetting agent along with the use of inorganic particles is preferably 0.01 parts by mass or more, more preferably 0.02 parts by mass or more, further preferably 0.05 parts by mass or more, and preferably 1 parts by mass or less, more preferably 0.5 parts by mass or less, per 100 parts by mass of the inorganic particles. When the use amount of the wetting agent is at least the aforementioned lower limit, the functional layer composition can be sufficiently improved in coatability. When the use amount of the wetting agent is not greater the aforementioned upper limit, the functional layer formed by using the functional layer composition can be improved in adhesiveness strength to substrates such as a separator and an electrode.

### <Preparation of Functional Layer Composition>

The non-aqueous secondary battery functional layer composition may be prepared, without being particularly limited, by mixing a predetermined block copolymer as the polymer, a solvent, inorganic particles, and optional additional components, as long as the aforementioned predetermined polymer and solvent are used. Here, when the functional layer composition is prepared by using, for example, dispersions such as a dispersion having a polymer dispersed therein and a dispersion having inorganic particles dispersed therein, a solvent contained in a liquid part of the aforementioned dispersion may also be used as the solvent for the functional layer composition.

Here, the aforementioned components may be mixed in any order without being particularly limited. However, in the case of using inorganic particles, a dispersant, and also a wetting agent for preparing the functional layer composition, the inorganic particles and the dispersant are preferably mixed first to prepare in advance a dispersion of inorganic particles, and then the resultant dispersion may be mixed with the polymer and the wetting agent.

Further, the method of mixing the aforementioned components is not particularly limited. However, a dispersing device may be used as the mixing device to mix the components in order to efficiently disperse the components. Then, the dispersing device is preferably capable of uniformly dispersing and mixing the aforementioned components. Examples of the dispersing device include a media-less dispersing device, a ball mill, a sand mill, a pigment disperser, a mortar machine, an ultrasonic disperser, a homogenizer, and a planetary mixer.

### (Non-Aqueous Secondary Battery Functional Layer)

The non-aqueous secondary battery functional layer is formed by using the aforementioned non-aqueous secondary battery functional layer composition. The non-aqueous secondary battery functional layer can be formed by, for example, applying the aforementioned functional layer composition onto a surface of a proper substrate to form a coating, and by drying the coating thus formed. That is, the non-aqueous secondary battery functional layer is a dried product of the aforementioned non-aqueous secondary battery functional layer composition, and generally includes the aforementioned predetermined polymer and inorganic particles, and any additional components such as a binder, a dispersant, a wetting agent.

The non-aqueous secondary battery functional layer, which is formed by using the aforementioned non-aqueous secondary battery functional layer composition, is excellent in blocking resistance. For example, in a secondary battery manufacturing process, the battery members such as a functional layer-equipped separator provided with the functional layer can be favorably stored and transported without causing blocking thereamong, allowing for efficient manufacturing of secondary batteries. Further, the non-aqueous secondary battery functional layer, which is formed by using the aforementioned non-aqueous secondary battery functional layer composition, is excellent in pressure-sensitive adhesiveness. Therefore, in a secondary battery manufacturing process, for example, the functional layer ensures favorable and efficient adhesiveness among the battery members such as an electrode and a separator. Further, the non-aqueous secondary battery functional layer may be disposed anywhere in a secondary battery, preferably between the battery members such as an electrode and a separator to ensure favorable adhesiveness among the battery members, more preferably allow for favorable adhesiveness, as a functional layer-equipped separator, between the functional layer-equipped separator and an electrode, to thereby allow the secondary battery to exhibit excellent cycle characteristics.

### <Substrate>

The substrate to be applied with the functional layer composition is not particularly limited. For example, a coating of the functional layer composition may be formed on a surface of a releasable substrate and may be dried to form a functional layer, and then the releasable substrate may be peeled off from the functional layer. The functional layer thus peeled off from the releasable substrate may also be used as a self-supporting film for forming battery members of a secondary battery. Specifically, the functional layer peeled off from the releasable substrate may be laminated on a separator substrate to form a functional layer-equipped separator, or the functional layer peeled off from the releasable substrate may be laminated onto an electrode substrate to form a functional layer-equipped electrode.

However, in terms of improving manufacturing efficiency of the battery members by omitting the step of peeling off the functional layer, a separator substrate or an electrode substrate is preferably used as the substrate, and more preferably a separator substrate may be used as the substrate. The functional layer formed on a separator substrate and an electrode substrate has high pressure-sensitive adhesiveness as well as blocking resistance. Accordingly, the aforementioned functional layer can be suitably used as an adhesive layer (pressure-sensitive adhesive layer) capable of ensuring favorable and efficient adhesiveness among the battery members while imparting high blocking resistance to the battery members in the process of manufacture.

### <<Separator Substrate>>

Examples of the separator substrate include known separator substrates such as an organic separator substrate. The organic separator substrate is a porous member made from an organic material. Examples of the organic separator substrate include: a porous film or a non-woven cloth including a polyolefin resin such as polyethylene, polypropylene and an aromatic polyamide resin. Of those, a polyethylene porous film is preferred in terms of excellent strength.

Then, a separator substrate having a functional layer formed on a surface thereof can be used as a functional layer-equipped separator in a method of manufacturing a non-aqueous secondary battery to be described later.

The separator substrate may have an arbitrary thickness, which is preferably 5 µm or more, more preferably 10 µm or more, and preferably 30 µm or less, more preferably 20 µm or less. The separator substrate with a thickness of at least the aforementioned lower limit can provide sufficient strength. The separator substrate with a thickness of not greater than the aforementioned upper limit can suppress reduction in ion conductivity in the secondary battery, to thereby improve the secondary battery performance.

### «Electrode Substrate»

The electrode substrate (positive electrode substrate, negative electrode substrate) is not particularly limited, and an example thereof is an electrode substrate having an electrode mixed material layer formed on a current collector.

Below, a description is given of an example where the non-aqueous secondary battery electrode functional layer is a lithium ion secondary battery functional layer; however, the present invention shall not be limited to only one example described below.

Here, a known method may be used as a method for forming: a current collector; an electrode active material (a positive electrode active material, a negative electrode active material) in an electrode mixed material layer, and an electrode mixed material layer binder (a positive electrode mixed material layer binder, a negative electrode mixed material layer binder); and an electrode mixed material layer onto a current collector. For example, the method described in JP2013-145763A may be used.

### <Functional Layer Forming Method>

The following methods can be exemplified as the aforementioned method for forming a functional layer on a substrate such as a separator substrate or an electrode substrate.
1) A method of applying the non-aqueous secondary battery functional layer composition onto a surface of a separator substrate or of an electrode substrate (a surface on an electrode mixed material layer side in the case of an electrode substrate; hereinafter the same); and then drying the composition thus applied;
2) A method of immersing a separator substrate or an electrode substrate in the non-aqueous secondary battery functional layer composition; and drying the substrate thus immersed; and
3) A method of applying the non-aqueous secondary battery functional layer composition onto a releasable substrate and then drying the composition to manufacture a functional layer; and transferring the functional layer thus obtained onto a surface of a separator substrate or of an electrode substrate.

Of those, the method 1) is particularly preferred in terms of readily regulating the thickness of the functional layer. The method 1) includes, in particular, the steps of: applying (application step) the functional layer composition onto a substrate; and drying the functional layer composition applied on the substrate to thereby form a functional layer (functional layer forming step).

### «Application Step»

In the application step, examples of the method for applying the functional layer composition onto a substrate include a doctor-blade method, a reverse roll method, a direct roll method, a gravure method, an extrusion method, and a brush painting method.

In the case of applying the functional layer composition onto a substrate, the functional layer composition may be applied onto only one of the surfaces of the substrate or onto both surfaces of the substrate; in the case of using a separator substrate as the substrate, the functional layer composition is preferably applied onto both surfaces of the separator substrate.

### «Functional Layer Forming Step»

In the functional layer forming step, a known method may be used for drying the functional layer composition on the substrate, without being particularly limited. Exemplary drying method include: drying by warm air, hot air, or low humidity wind; vacuum drying; and drying by irradiation of infrared light or an electron beam. The drying conditions are not particularly limited and the drying may be performed with a drying temperature of preferably 23-150°C, and the drying time of preferably 1-30 minutes.

### < Thickness of Functional Layer>

The functional layer to be formed by using the non-aqueous secondary battery functional layer composition preferably has a thickness of 0.5 µm or more and 5 µm or less. When the functional layer has a thickness of at least the aforementioned lower limit, the functional layer may be further imparted with pressure-sensitive adhesiveness, which ensures, for example, further favorable and efficient adhesiveness among the battery members via the functional layer. Further, when the functional layer has a thickness of not greater than the aforementioned upper limit, the functional layer can be imparted with higher blocking performance, which further suppresses blocking among the functional layer-equipped battery members, allowing for further efficient manufacturing of the secondary battery.

The battery member including the non-aqueous secondary battery functional layer (for example, a functional layer-equipped separator and a functional layer-equipped electrode to be described layer) may also include, in addition to the separator substrate or the electrode substrate, and the functional layer, constituent elements other than the aforementioned functional layer, without significantly deteriorating any of the effects as disclosed herein.

Examples of the constituent elements other than the aforementioned functional layer include, without being particularly limited as long as it does not fall under the functional layer according to the present invention, a heat resistance layer disposed above or below the functional layer according to the present invention to physically protect the battery members.

### (Non-Aqueous Secondary Battery)

The non-aqueous secondary battery has the aforementioned non-aqueous secondary battery functional layer. The non-aqueous secondary battery generally includes, without being particularly limited, a positive electrode, a negative electrode, a separator, and an electrolyte solution, and is configured to have a casing hermetically accommodating a battery member assembly including battery members such as a positive electrode, a negative electrode, and a separator.

Here, the aforementioned functional layer may be disposed on the battery members such as the positive electrode, the negative electrode, and the separator which may be included in a secondary battery, or between the layers of the casing hermetically accommodating the battery member assembly. In particular, in terms of sufficiently utilizing the excellent blocking performance and pressure-sensitive adhesiveness of the functional layer as well as imparting excellent cycle characteristics to the secondary battery, at least one of the positive electrode, the negative electrode, and the separator may be preferably be provided with the aforementioned functional layer (to form a functional layer-equipped battery member), and the aforementioned functional layer may further preferably be provided at least on the separator (to form a functional layer-equipped separator). The functional layer-equipped separator preferably has the aforementioned functional layers provided on both surfaces of the separator.

Then, the non-aqueous secondary battery, which has the non-aqueous secondary battery functional layer, exhibits excellent cycle characteristics.

### <Positive Electrode, Negative Electrode, and Separator>

The positive electrode, the negative electrode, and/or the separator that may be used in the secondary battery are not particularly limited, and examples thereof include those similar to the electrode formed of the electrode substrate or the separator formed of the separator substrate, which are listed under the title of "non-aqueous secondary battery functional layer".

A method of providing a functional layer on the aforementioned positive electrode, negative electrode, and/or separator may follow a method similar to the method of forming a functional layer listed under the title of "non-aqueous secondary battery functional layer". As described above, the secondary battery may include, for example, a functional layer-equipped electrode obtained by providing the non-aqueous secondary battery functional layer on an electrode substrate obtained by forming an electrode mixed material layer on a current collector, or may include a functional layer-equipped separator obtained by providing the non-aqueous secondary battery functional layer on a separator substrate.

### <Electrolyte solution>

An organic electrolyte solution having a supporting electrolyte dissolved in an organic solvent is generally used as the electrolyte solution. Lithium salt may be exemplified as the supporting electrolyte in the case of a lithium ion secondary battery. Examples of the lithium salt include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, (C₂F₅SO₂)NLi, among which LiPF₆, LiClO₄, CF₃SO₃Li are preferred as being readily soluble in a solvent and exhibiting high degree of dissociation. The electrolytes may each be used alone or in combination of two or more. In general, the lithium-ion conductivity tends to increase as the degree of dissociation of the supporting electrolyte increases, and thus, the lithium-ion conductivity may be regulated depending on the kind of the supporting electrolyte.

The organic solvent to be used for the electrolyte solution is not particularly limited, and may include any kind capable of dissolving the supporting electrolyte. Examples of the organic solvent in the case of, for example, a lithium ion secondary battery suitably include: carbonates such as dimethyl carbonate (DMC), ethylene carbonate (EC), diethyl carbonate (DEC), propylene carbonate (PC), butylene carbonate (BC), methyl ethyl carbonate (MEC); esters such as γ-butyrolactone, methyl formate; ethers such as 1,2-dimethoxyethane, tetrahydroxyflan; and sulfur-containing compounds such as sulfolane, dimethylsulfoxide. A mixed solution of these solvents may also be used, with carbonates being preferred for their high dielectric constant and wide stable potential regions. In general, the lithium-ion conductivity tends to increase as the used solvent is low in viscosity, and thus the lithium-ion conductivity can be regulated depending on the type of the solvent.

The concentration of the electrolyte in the electrolyte solution may be adjusted as appropriate. Further, known additives may be added to the electrolyte solution.

### (Method of Manufacturing Non-Aqueous Secondary Battery)

The method of manufacturing the non-aqueous secondary battery is a method of manufacturing a non-aqueous secondary battery including: a positive electrode, a negative electrode, a separator, and an electrolyte solution, at least one of the aforementioned positive electrode, the negative electrode, and the separator being provided with a non-aqueous secondary battery functional layer, the method including the steps of: laminating at least two of the positive electrode, the negative electrode, and the separator via the aforementioned non-aqueous secondary battery functional layer to obtain a laminate; and pressurizing the laminate. Further, the method of manufacturing the non-aqueous secondary battery may further include, prior to the step of obtaining the laminate, a step of forming a functional layer-equipped separator and/or a functional layer-equipped electrode, or may further include the step of heating the laminate simultaneously with and/or after the step of pressurizing the laminate.

According to the method of manufacturing the non-aqueous secondary battery, the steps of laminating and pressurizing the laminate are performed using the non-aqueous secondary battery functional layer, which allows the resultant secondary battery to exhibit excellent cycle characteristics.

### <Step of forming Functional Layer-Equipped Separator>

The manufacturing method may include a step of forming a functional layer-equipped separator, in which the aforementioned non-aqueous secondary battery functional layer is provided on a surface of the separator substrate to form a functional layer-equipped separator. Here, the separator substrate may be similar to the separator substrates listed under the title of "non-aqueous secondary battery functional layer", and a method of providing the non-aqueous secondary battery functional layer may follow a method similar to the method of forming a functional layer as listed under the title of "non-aqueous secondary battery functional layer".

Further, in terms of increasing operation efficiency in the steps of obtaining a laminate and pressurizing the laminate, which are described later, as well as imparting favorable performance to the secondary battery, the functional layer-equipped separator preferably has the functional layers formed on both surfaces of the separator substrate.

### <Step of forming Functional Layer-Equipped Electrode>

The manufacturing method may include a step of forming a functional layer-equipped electrode, in which the aforementioned non-aqueous secondary battery functional layer is provided on a surface of the electrode substrate to form a functional layer-equipped electrode. Here, the electrode substrate may be similar to the electrode substrates listed under the title of "non-aqueous secondary battery functional layer", and a method of providing the non-aqueous secondary battery functional layer may be a method similar to the method of forming a functional layer as listed under the title of "non-aqueous secondary battery functional layer".

### <Step of obtaining Laminate>

In the step of obtaining a laminate, at least two of the positive electrode, the negative electrode, and the separator are laminated via the aforementioned non-aqueous secondary battery functional layer to obtain a laminate. In laminating those via the functional layer, the functional layer may be arranged, as a self-supporting film, between the battery members selected from the positive electrode, the negative electrode, and the separator, or the battery members being equipped with a functional layer on the substrates selected from the positive electrode, the negative electrode, and the separator may be used. In particular, in the step of obtaining a laminate, functional layer-equipped battery members are preferably used, and a battery member obtained by providing the functional layer on the separator substrate (functional layer-equipped separator) is more preferably used. Unlike the case of forming a functional layer-equipped electrode, the functional layer-equipped separator can generally be formed with no application of any pressure such as roll press to increase the electrode density, which can prevent the functional layer to be inadvertently adhered to undesired portions in the process of manufacturing the battery members.

When using the functional layer-equipped separator in the step of obtaining a laminate, the functional layer-equipped separator and the positive electrode, and/or the functional layer-equipped separator and the negative electrode may be laminated via the non-aqueous secondary battery functional layer in the step of obtaining a laminate; specifically, the non-aqueous secondary battery functional layer may be laminated such that the functional layer side of the functional layer-equipped separator faces either the positive electrode mixed material layer side of the positive electrode or the negative electrode mixed material layer side of the negative electrode. Further, the functional layer-equipped separator and the positive electrode, and the functional layer-equipped separator and the negative electrode are preferably laminated via the non-aqueous secondary battery functional layer; specifically, the non-aqueous secondary battery functional layer may be laminated such that the functional layer side of the functional layer-equipped separator faces either the positive electrode mixed material layer side of the positive electrode or the negative electrode mixed material layer side of the negative electrode. In particular, in the step of obtaining a laminate, in the case of using a functional layer-equipped separator having the functional layers provided on both sides, the functional layer-equipped separator and the positive electrode, and the functional layer-equipped separator and the negative electrode may be laminated via the non-aqueous secondary battery functional layer, so as to be arranged in the order of, for example, the positive electrode/the functional layer-equipped separator/the negative electrode; specifically, the electrodes and the separator may be layered such that the functional layers on both sides of the functional layer-equipped separator each face the positive electrode mixed material layer side of the positive electrode and the negative electrode mixed material layer side of the negative electrode.

Further, in the case of obtaining a laminate, the positive electrode, the functional layer-equipped separator, and the negative electrode laminated as above may further be rolled up (wounded) or folded to obtain a wound body as the laminate.

### <Step of Pressurizing Laminate>

In the step of pressurizing a laminate, the laminate such as a wound body obtained as described above is pressurized under arbitrary conditions. The laminate thus pressurized may serve as the battery member assembly to form a secondary battery. Here, the functional layer of the laminate is excellent in pressure-sensitive adhesiveness, and thus, pressurizing the laminate can ensure favorable adhesiveness among the positive electrode, the negative electrode, and the separator via the functional layer in the laminate.

Here, the pressure may be set to, for example, 0.1-0.8 MPa, without being particularly limited. The pressure may be applied for, for example, 1 second to 1 minute. The functional layer of the laminate is high in pressure-sensitive adhesiveness, and thus capable of ensuring favorable adhesiveness among the battery members even when the aforementioned low pressure is applied for a short time.

### <Step of Heating>

The method of manufacturing the non-aqueous secondary battery may further preferably include the step of heating the laminate simultaneously with and/or after the aforementioned step of pressurizing the laminate for the following reason. When the laminate is heated while being pressurized and/or the laminate is heated after being pressurized, the pressure-sensitive adhesiveness of the functional layer can more effectively be utilized, which allows for more favorable adhesiveness, for example, among the battery members via the functional layers.

The heating temperature may be set to, for example, an ambient temperature of 25-80°C, which is preferably 70°C or less. Further, the heating time may be set similarly to the aforementioned pressurizing time. The functional layer of the laminate is excellent in pressure-sensitive adhesiveness, and thus capable of ensuring efficient and more favorable adhesiveness among the battery members even when the pressure is applied at relatively low temperatures for a short time as described above.

### <Assembly Step>

Then, the pressurized and arbitrarily heated laminate (battery member assembly) obtained as above is placed in a casing, which is then filled with an electrolyte solution and sealed (to hermetically accommodate the electrolyte solution), to thereby manufacture a secondary battery. Here, the secondary battery obtained according to the manufacturing method, comprises at least two of the positive electrode, negative electrode, and separator are laminated via the non-aqueous secondary battery functional layer, which allows for favorable and efficient adhesiveness among the battery members. Further, in the secondary battery, when the layers forming the casing are laminated and pressurized via the non-aqueous secondary battery functional layer, the casing can favorably hermetically accommodate, for example, the battery assembly and the electrolyte solution. Then, the casing may be provided, as necessary, with expanded metal, an over-current protection element such as a fuse and a PTC element, and a lead plate, to thereby prevent pressure increase within the battery and excessive charge/discharge. The battery may be in any shape such as, for example, a coin shape, a button shape, a sheet shape, a cylinder shape, a rectangular shape, or an oval shape.

### EXAMPLES

Hereinafter, the present invention will be specifically described with reference to Examples; however, the invention is not limited to the Examples. In the following, "%" and "parts" used in expressing quantities are by mass, unless otherwise specified.

In a polymer produced by copolymerization of more than one monomer, the percentage of a structural unit formed by polymerization of a monomer in the polymer is consistent with the proportion (charging ratio) of the monomer in the total monomers used for the polymerization of the polymer, unless otherwise indicated.

In Examples and Comparative Examples, the following properties were measured and evaluated by the methods described below: the diblock content and the weight average molecular weight of the polymer; the blocking resistance of the functional layer-equipped separator; the adhesiveness of the functional layer-equipped separator that has been immersed in an electrolyte solution (after electrolyte solution immersion); the pressure-sensitive adhesiveness between the electrode and the separator via the functional layer; and the cycle characteristics of the secondary battery.

### <Diblock Content>

The diblock content of the polymer was measured as a polystyrene-converted molecular weight for the obtained block copolymer, using a high performance chromatograph (manufactured by Tosoh Corporation; model number: 'HLC8220'). Further, for the measurement, three-connected columns (manufactured by Showa Denko K.K.; model number: 'Shodex KF-404HQ', column temperature: 40°C, carrier: tetrahydrofuran with a flow rate of 0.35 ml/min.) were used, with a differential refractometer and an ultraviolet detector being used as detectors. The molecular weight was calibrated at 12 points on standard polystyrene (manufactured by Polymer Laboratories Ltd.; a standard molecular weight: 500-3000000).

Then, in the chart obtained from the aforementioned high performance chromatograph, the area ratio between: the peak that corresponds to the consecutive-block region formed of consecutive blocks of aromatic vinyl monomers and aliphatic conjugated-diene monomers; and the peak that corresponds to any other region than the consecutive-block region, based on which the diblock content (mass%) was obtained.

### <Weight Average Molecular Weight>

The weight average molecular weight of the polymer was measured as a polystyrene-converted value, by gel permeation chromatography (GPC). The test sample was prepared by: adding, to about 5 mL eluent, a polymer at a solid concentration of about 0.5 g/L; leaving the polymer to be gradually dissolved at room temperature; visually confirming that the polymer was dissolved; and then gradually filtering the polymer with a filter with an aperture of 0.45 µm. The measurement was performed under the following conditions.

### <<Measurement Conditions>>

Eluent: dimethylformamide (DMF, additive: 50 mM lithium bromide, 10 mM phosphate)
Sample Concentration: about 0.5 g/L (solid concentration)
Column: TSK gel Super AWM-H × 2 pieces (manufactured by Tosoh Corporation; ϕ 6.0 mm I.D. × 15 cm × 2 pieces)
Column Temperature: 40°C
Injection Amount: 200 µL
Flow Rate: 0.5 mL/min.
Detector: Differential Refractometer Detector RI (manufactured by Tosoh Corporation; model number: 'HLC-8320 GPC' RI detector)
Detector Conditions: RI: Pol (+), Res (1.0s)
Molecular Weight Marker: Standard Polystyrene kit PStQuick Kit-H manufactured by Tosoh Corporation

### <Blocking Resistance>

The blocking resistance of the functional layer-equipped separator was evaluated as follows. Specifically, the functional layer-equipped separator that has a functional layer on one side alone was cut into a square piece with 5 cm in width × 5 cm in length. Then, two of the functional layer-equipped separators thus cut into square pieces were layered together such that the functional layer sides faced each other. The square pieces of the functional layer-equipped separator thus layered together were placed under the temperature of 40°C and the pressure of 0.5 MPa, to thereby obtain a press sample piece. The obtained press sample piece was left to stand for 24 hours, and thereafter either one of the square pieces of the press sample piece was entirely fixed while the other one of the square piece was pulled with a force of 0.3 N/m. Then, it was observed whether the piece can be peeled off or not, and the adhesiveness state (blocking state) was evaluated based on the following criteria; the blocking resistance was evaluated as being more excellent as the adhesiveness state was less observed.
A: the square pieces are not adhered to each other.
B: the square pieces are adhered to each other but can be peeled apart.
C: the square pieces are adhered to each other and cannot be peeled off from each other.

### <Adhesiveness after Electrolyte Solution Immersion >

The adhesiveness after electrolyte solution immersion was evaluated as follows using a functional layer-equipped separator. Specifically, a functional layer-equipped separator having a functional layer provided on one side alone was cut out in a size of 10 cm in width × 10 cm in length to serve as a test piece. The test piece thus obtained was immersed in an electrolyte solution of 60°C for 24 hours, and thereafter the electrolyte solution remaining on the surface was wiped off.

Here, the electrolyte solution was prepared by dissolving, into a mixed solvent of EC, DEC, and VC (volume mixture ratio: ethylene carbonate/diethyl carbonate/vinylene carbonate =68.5/30/1.5), LiPF₆ as the supporting electrolyte, at a concentration of 1 mol/L.

Thereafter, a cellophane tape was stuck to the functional layer side surfaces of the test piece having been immersed in an electrolyte solution. The cellophane tape as used herein conformed to JIS Z1522. The cellophane tape was kept fixed on a horizontal test bed. Then, one end of the separator side of the test piece having been immersed in an electrolyte solution was pulled vertically upward at a pulling speed of 50 mm/minute and the stress (N/m) needed to peel off the test piece was measured. The measurement was performed three times and the average value of the stresses was defined as the peel strength (N/m), to thereby evaluate the adhesiveness of the functional layer-equipped separator having been immersed in an electrolyte solution, based on the following criteria. A larger peel strength indicates that the functional layer exhibits more excellent adhesiveness and excellent adhesiveness is ensured between the functional layer and the separator in the functional layer-equipped separator having been immersed in an electrolyte solution.
A: Peel Strength is 10 N/m or more
B: Peel Strength is 5 N/m or more and less than 10 N/m
C: Peel Strength is less than 5 N/m

### <Pressure-Sensitive Adhesiveness>

The pressure-sensitive adhesiveness of the functional layer was evaluated as follows. Specifically, the obtained positive electrode, negative electrode, and functional layer-equipped separator having the functional layer on one side alone were each cut out into 10 mm wide and 50 mm long. Then, the positive electrode and the functional layer-equipped separator; and the negative electrode and the functional layer-equipped separator were each laminated such that the electrode mixed material layer (either the positive electrode mixed material layer or the negative electrode mixed material layer) and the functional layer face each other. Next, the laminate of the positive electrode/the functional layer-equipped separator and the laminate of the negative electrode/the functional layer-equipped separator were each pressed by a roll press under the load of 10 kN/m at 25°C, to thereby obtain a test piece.

The test piece was placed with the current collector side surface of the (positive or negative) electrode facing down, and a cellophane tape was stuck to the current collector side surface of the electrode. The cellophane tape as used herein conformed to JIS Z1522. The cellophane tape was kept fixed on a horizontal test bed. Then, one end of the separator side of the test piece was pulled vertically upward at a pulling speed of 50 mm/minute and the stress (N/m) needed to peel off the test piece was measured. The measurement was performed three times for each of the laminate of the positive electrode/the functional layer-equipped separator and the laminate of the negative electrode/the functional layer separator (the measurement was performed six times in total), and the average value of the stresses was obtained as the pressure-sensitive adhesive strength (N/m), to thereby evaluate the pressure-sensitive adhesiveness of the functional layer based on the following criteria. A larger pressure-sensitive adhesive strength indicates that the functional layer ensures more favorable adhesiveness between the electrode and the separator.
A: pressure-sensitive adhesive strength is 5 N/m or more
B: pressure-sensitive adhesive strength is 1 N/m or more and less than 5 N/m
C: pressure-sensitive adhesive strength is less than 1 N/m

### <Cycle Characteristics>

The resultant winding-type lithium ion secondary battery with a discharge capacity of 800 mAh was left still for 24 hours under the environment at 25°C. Next, under the environment at 25°C, the battery was subjected to the charge/discharge operation to be charged to 4.3 V at the charge rate of 0.1 C and discharged to 2.75 V at the discharge rate of 0.1 C, and measured for the initial capacity C0. Thereafter, the similar charge/discharge operation was repeated under the environment of 25°C, to measure the capacity C1 after 1000 cycles. Then, the capacity retention before and after the charge-discharge cycles was calculated as ΔC (%) = (C1/C0) × 100, which was evaluated based on the following criteria. A larger value of the capacity retention ΔC indicates more excellent cycle characteristics.
A: the capacity retention ΔC is 85% or more
B: the capacity retention ΔC is 80% or more and less than 85%
C: the capacity retention ΔC is less than 80%

### (Example 1)

### <Preparation of Polymer>

### <<Step (i)>>

A fully nitrogen-substituted reactor equipped with a stirrer was charged with 550 parts of dehydrated cyclohexane, 15 parts of dehydrated styrene as the aromatic vinyl monomers, and 0.475 parts of n-butyl ether, and then further changed with 0.485 parts of n-butyl lithium (15% cyclohexane solution) while being stirred at 60°C to start polymerization, which was then reacted at 60°C for 1 hour while being stirred. The polymerization conversion rate at this point was 99.5%. The polymerization conversion rate was measured by gas chromatography (hereinafter the same).

### «Step (ii)»

Next, 60 parts of dehydrated isoprene as the aliphatic conjugated diene monomers were charged and kept stirred at 60°C for 30 minutes to continue polymerization. The polymerization conversion rate at this point was 99%.

### «Step (iii)»

Thereafter, 15 parts of dehydrated styrene as the aromatic vinyl monomers were further charged and stirred at 60°C for 60 minutes. The polymerization conversion rate at this point was almost 100%.

### «Step (iv)»

Next, 8 parts of n-butyl acrylate and 2 parts of itaconic acid as the additional monomers that may constitute the additional monomer unit were charged and stirred at 60°C for 60 minutes. The polymerization conversion rate at this point was almost 99%. Then, 0.5 parts of isopropyl alcohol were added to the reaction liquid to stop the reaction. Further, the solution obtained by stopping the reaction was dissolved into toluene, to thereby obtain a solution (SIS solution) which contains, as the polymer, a styrene-isoprene-styrene-block copolymer at a concentration of 25%.

### «Step (v)»

Subsequently, a mixture containing a linear alkylbenzene sodium sulfonate, alkylpolyoxyethylene sodium sulfonate, and alkylpolyoxyethylene disodium at 1:1:1 was dissolved in ion exchanged water to prepare a solution at a concentration of 2%.

Then, 500 g of the aforementioned SIS solution and 500 g of the aforementioned solution were charged into a tank and stirred to perform premixing, which was subsequently transferred from the premixing tank to a milder (manufactured by Pacific Machinery & Engineering Co., Ltd; product name: 'MDN303V') by means of a metering pump at a rate of 100 g/min., and stirred at 20000 rpm, to thereby perform phase-transfer emulsification.

Next, toluene in an emulsion obtained by the phase-transfer emulsion was vacuum distilled by a rotary evaporator, and thereafter settled for separation for a day in a chromatography column with a cock to remove the lower layer portion after the separation, to thereby perform condensation.

Lastly, the upper layer portion was filtered by a metal gauze of 100 mesh, to thereby prepare a latex (SIS latex) including a styrene-isoprene-styrene-block copolymer as the polymer. In the obtained polymer, the latex had a concentration of 60%, a weight average molecular weight of 450000, and a volume average particle size (D50) of 0.9 µm measured by laser diffraction.

Then, the obtained polymer was measured for the diblock content according to the aforementioned method. In the styrene-isoprene-styrene-block copolymer as the obtained polymer, the content of the styrene monomer units was 30%, the content of the isoprene monomer units was 60%, and the diblock content of the consecutive-block region including consecutive blocks of aromatic vinyl monomers and aliphatic conjugated diene monomers was 45%. Table 1 shows the results thereof.

### <Fabrication of Functional Layer Binder>

A reactor equipped with a stirrer was charged with: 70 parts of ion exchange water; 0.15 parts of sodium lauryl sulfate (manufactured by Kao Chemicals; product name: 'Emal 2F') as an emulsifier; and 0.5 parts of ammonium peroxydisulfate, the gas phase part was substituted by a nitrogen gas, and then the reactor was heated to 60°C.

Meanwhile, in a separate vessel, 50 parts of ion exchange water, 0.5 parts of sodium dodecylbenzensulfonate as an emulsifier, and, as the polymeric monomers, 94 parts of butyl acrylate, 2 parts of acrylonytrile, 2 parts of methacrylic acid, 1 part of N-hydroxymethylacrylamide, and 1 part of allyl glycidyl ether were mixed, to thereby obtain a monomer mixture. The monomer mixture was sequentially added to the aforementioned reactor over 4 hours to perform polymerization. The reaction was performed at 60°C while the monomer mixture was being added. After the monomer mixture was completely added, the mixture was further stirred at 70°C for another 3 hours to complete the reaction, to thereby manufacture an aqueous dispersion including an acrylic polymer as a functional layer binder.

### <Preparation of Functional Layer Composition>

With respect to 100 parts of α alumina particles (manufactured by Nippon Light Metal Company Ltd.; trade name: 'LS-256', primary particle size: 0.8 µm, specific surface area: 6.4 m²/g) as the inorganic particles, 2.5 parts of a polycarbonate dispersant (manufactured by San Nopco Limited; trade name: 'SN Dispersant 5020') as the additional component were added. Further, water was added thereto to obtain a coarse dispersion having a solid concentration of 50%, which was subjected to dispersion treatment as being passed once through a media-less dispersing device (manufactured by IKA com.; product name: 'In-line Cone Mill MKO'), to thereby prepare an aqueous dispersion of α alumina particles. The media-less dispersing device performed dispersion treatment of the coarse dispersion under the following conditions: the gap between the rotor and the stator: 0.1 mm; the peripheral speed: 10 m/sec.; the flow rate: 200 L/hour.

Then, 100 parts by solid equivalent of the aqueous dispersion of α alumina particles as the inorganic particles, 8 parts by solid equivalent of the SIS latex obtained above as the polymer, and 1.8 parts by solid equivalent of the aqueous dispersion including an acrylic polymer obtained above as the functional layer binder as the additional component were mixed with ion exchanged water and dispersed. Further, 0.2 parts of a polyethylene glycol-base surfactant (manufactured by San Nopco Limited; product name: 'San Nopco (registered trademark) SN wet 980') as the wetting agent as the additional component was mixed, to thereby obtain a functional layer composition with a solid concentration adjusted to 40%.

### <Preparation of Functional Layer-Equipped Separator>

An organic separator (manufactured by Celgard, LLC.; product name: '2500') formed of a polyethylene porous material was prepared as the separator substrate. Then, the functional layer composition obtained above were applied on both sides of the obtained separator substrate, which was dried for 3 minutes under the temperature of 50°C, to thereby prepare a functional layer-equipped separator provided with functional layers each being 3 µm-thick per one side.

Another functional layer-equipped separator was separately prepared by forming the functional layer on only one side of a separator substrate similar to the above under the conditions similar to the above.

Then, the functional layer-equipped separator having the functional layer provided on only one side was evaluated, according to the aforementioned method, for blocking resistance and adhesiveness after the electrolyte solution immersion. Table 1 shows the results thereof.

### <Preparation of Positive Electrode>

N-methylpyrrolidone was mixed with: 100 parts of LiCoO₂ (volume average particle diameter: 12 µm) as the positive electrode active material; 2 parts of acetylene black (manufactured by Denki Kagaku Kogyo; product name: 'HS-100') as the conductor material; and 2 parts by solid equivalent of polyvinylidene fluoride (manufactured by Kureha Corporation; product name: '#7208') as the positive electrode mixed material binder, and the total solid concentration was adjusted to 70%. The mixture was mixed in a planetary mixer, to thereby obtain a slurry composition for a positive electrode.

A comma coater was used to apply the obtained slurry composition for a positive electrode onto aluminum foil of 20 µm in thickness, used as a current collector, so as to have a film thickness of about 150 µm after being dried. The applied slurry was dried by conveying the aluminum foil inside a 60°C oven for 2 minutes at a speed of 0.5 m/min. Thereafter, the composition was heat treated at 120°C for 2 minutes, to obtain a positive electrode web. This pre-pressing positive electrode web was pressed by roll pressing, to thereby obtain a post-pressing positive electrode having a positive electrode mixed material layer of 80 µm in thickness.

Then, the laminate of the positive electrode/the functional layer-equipped separator including the obtained post-pressing positive electrode and the functional layer-equipped separator having a functional layer equipped on only one side was measured for pressure-sensitive adhesiveness according to the aforementioned method and evaluated. Table 1 shows the results thereof.

### <Preparation of Negative Electrode>

A 5 MPa pressure resistant container with a stirrer was charged with 33.5 parts of 1,3-butadiene, 3.5 parts of itaconic acid, 62 parts of styrene, 1 part of 2-hydroxyethyl acrylate, 0.4 parts of sodium dodecylbenzenesulfonate as an emulsifier, 150 parts of ion exchanged water, and 0.5 parts of potassium perosulfate as a polymerization initiator, which were sufficiently stirred and then heated to 50°C to start polymerization. When the polymerization conversion rate of all the monomers added reached 96%, the mixture was cooled to stop the reaction, to thereby obtain a mixture including a negative electrode mixed material layer binder (styrene-butadiene copolymer: SBR). The mixture including the aforementioned negative electrode mixed material layer binder was added with 5% sodium hydroxide aqueous solution and adjusted to pH 8, and then unreacted monomers were removed therefrom by heated vacuum distillation. Thereafter, the mixture was cooled to 30°C or lower, to thereby obtain an aqueous dispersion including the negative electrode mixed material layer binder.

Next, 100 parts of synthetic graphite (volume average particle diameter: 15.6 µm) as a negative electrode active material, 1 part by solid equivalent of 2% aqueous solution of sodium carboxymethylcellulose (manufactured by Nippon Paper Industries Co., Ltd.; product name: 'MAC350HC') as a viscosity modifier, and ion exchanged water were mixed and adjusted to have a solid concentration of 68%, and then mixed at 25°C for 60 minutes. Then, ion exchanged water was used to adjust the solid concentration to 62%, and further mixed at 25°C for 15 minutes. Thereafter, the obtained mixture solution was added with: 1.5 parts by solid equivalent of an aqueous dispersion including the aforementioned negative electrode mixed material layer binder; and ion exchanged water, adjusted to have a final solid concentration of 52%, and further mixed for 10 minutes. The resultant mixture was subjected to a defoaming treatment under reduced pressure, to yield a slurry composition for a negative electrode having good fluidity.

Then, a comma coater was used to apply the obtained slurry composition for a negative electrode onto copper foil of 20 µm in thickness, used as a current collector, so as to have a film thickness of about 150 µm after being dried. The applied slurry was dried by conveying the copper foil inside a 60°C oven for 2 minutes at a speed of 0.5 m/min. Thereafter, the composition was heat treated at 120°C for 2 minutes to obtain a pre-pressing negative electrode web. This pre-pressing negative electrode web was pressed by roll pressing, to thereby obtain a post-pressing negative electrode in which the negative electrode mixed material layer has a thickness of 80 µm.

Then, the laminate of the negative electrode/the functional layer-equipped separator including the obtained post-pressing negative electrode and the functional layer-equipped separator having a functional layer equipped on only one side was measured for pressure-sensitive adhesiveness according to the aforementioned method and evaluated. Table 1 shows the results thereof.

### <Manufacture of Non-Aqueous Secondary Battery>

The post-pressing positive electrode obtained as above was cut out to 49 cm × 5 cm and placed with the positive electrode mixed material layer side surface facing up, on which a functional layer-equipped separator cut out to 120 cm × 5.5 cm and having functional layers on both sides thereof was placed such that the positive electrode is positioned on the left of the functional layer-equipped separator in the longitudinal direction. Further, the post-pressing negative electrode obtained as above was cut out to 50 cm × 5.2 cm, and disposed on a surface of the functional layer-equipped separator not in contact with the positive electrode, such that the negative electrode mixed material layer side surface faces the functional layer side and the negative electrode is positioned on the right of the functional layer-equipped separator in the longitudinal direction. Then, the aforementioned positive electrode, functional layer-equipped separator, and the negative electrode were wound by a winder around the center of the separator in the longitudinal direction, to thereby obtain a wound body. The wound body was pressed at 60°C under 0.5 MPa to be flattened. Further, the flattened body was packaged in an aluminum package as the casing, and an electrolyte solution (solvent: ethylene carbonate/diethyl carbonate/vinylene carbonate (mixing ratio by volume) = 68.5/30/1.5, electrolyte: LiPF₆ at a concentration of 1 M) was filled therein until no air remained therein. To hermetically seal the opening of the aluminum package, the opening was heat sealed at 150°C to close the aluminum package, to thereby manufacture a winding-type lithium ion secondary battery as a non-aqueous secondary battery.

Then, the lithium ion secondary battery thus obtained was measured for cycle characteristics according to the aforementioned method and evaluated. Table 1 shows the results thereof.

### (Example 2)

A polymer, a functional layer binder, a functional layer composition, a functional layer-equipped separator, a positive electrode, a negative electrode, and a non-aqueous secondary battery were manufactured as in Example 1, except that in preparing the polymer, Step (ii) was performed as described in below, and, without performing Step (iii), the diblock content of a consecutive-block region including consecutive blocks of aromatic vinyl monomers and aliphatic conjugated diene monomers in a styrene/butadiene/styrene-block copolymer as the polymer was adjusted to 33%.

Then, various measurements and evaluations were performed as in Example 1. Table 1 shows the results thereof.

### <Preparation of Polymer>

### «Step (ii)»

As the aliphatic conjugated diene monomer, 60 parts of 1,3-butadiene was added, and kept stirred at 60°C for 30 minutes to continue polymerization. The polymerization conversion rate at this point was 99%. Then, 0.3 parts of a mixture of tetramethoxysilane:dimethyldichlorosilane = 1:1 was added as a coupling agent to perform a coupling reaction for 2 hours.

### (Example 3)

A polymer, a functional layer binder, a functional layer composition, a functional layer-equipped separator, a positive electrode, a negative electrode, and a non-aqueous secondary battery were manufactured as in Example 2, except that in Step (ii) in preparation of the polymer, dehydrated isoprene was used as the aliphatic conjugated diene monomer in place of 1,3-butadiene, and the amount of the mixture of tetramethoxysilane:dimethyldichlorosilane was changed to 0.1 part, and the diblock content of a consecutive-block region including consecutive blocks of aromatic vinyl monomer and aliphatic conjugated diene monomer in a styrene/butadiene/styrene-block copolymer as the polymer was adjusted to 7%.

Then, various measurements and evaluations were performed as in Example 1. Table 1 shows the results thereof.

### (Example 4)

A polymer, a functional layer binder, a functional layer composition, a functional layer-equipped separator, a positive electrode, a negative electrode, and a non-aqueous secondary battery were manufactured as in Example 1, except that Step (ii) in preparation of the polymer was performed as described in below and the diblock content of a consecutive-block region including consecutive blocks of aromatic vinyl monomers and aliphatic conjugated diene monomers in a styrene/butadiene/styrene-block copolymer as the polymer was adjusted to 82%.

Then, various evaluations were performed as in Example 1. Table 1 shows the results thereof.

### <Preparation of Polymer>

### «Step (ii)»

As the aliphatic conjugated diene monomer, 60 parts of dehydrated isoprene was added, and kept stirred at 60°C for 30 minutes to continue polymerization. The polymerization conversion rate at this point was 99%. Then, 0.8 parts of a mixture of tetramethoxysilane:dimethyldichlorosilane = 1:1 was added as a coupling agent to perform a coupling reaction for 2 hours.

### (Example 5)

A polymer, a functional layer binder, a functional layer composition, a functional layer-equipped separator, a positive electrode, a negative electrode, and a non-aqueous secondary battery were manufactured as in Example 1, except that: in preparing the polymer, the amount of dehydrated styrene as the aromatic vinyl monomer was changed to 67 parts; and Step (ii) was performed as described in below such that the diblock content of a consecutive-block region including consecutive blocks of aromatic vinyl monomers and aliphatic conjugated diene monomers in a styrene/butadiene/styrene-block copolymer was adjusted to 23%.

Then, various measurements and evaluations were performed as in Example 1. Table 1 shows the results thereof.

### <Preparation of Polymer>

### «Step (ii)»

As the aliphatic conjugated diene monomer, 23 parts of dehydrated isoprene was added, and kept stirred at 60°C for 30 minutes to continue polymerization. The polymerization conversion rate at this point was 99%. Then, 0.2 parts of a mixture of tetramethoxysilane:dimethyldichlorosilane=1:1 was added as a coupling agent to perform a coupling reaction for 2 hours.

### (Example 6)

A polymer, a functional layer binder, a functional layer composition, a functional layer-equipped separator, a positive electrode, a negative electrode, and a non-aqueous secondary battery were manufactured as in Example 1, except that: in preparing the polymer, the amount of dehydrated styrene as the aromatic vinyl monomer was changed to 16 parts; and Step (ii) was performed as described in below such that the diblock content of a consecutive-block region including consecutive blocks of aromatic vinyl monomers and aliphatic conjugated diene monomers in a styrene/butadiene/styrene-block copolymer as the polymer was adjusted to 55%.

Then, various measurements and evaluations were performed as in Example 1. Table 1 shows the results thereof.

### <Preparation of Polymer>

### «Step (ii)»

As the aliphatic conjugated diene monomer, 74 parts of dehydrated isoprene was added, and kept stirred at 60°C for 30 minutes to continue polymerization. The polymerization conversion rate at this point was 99%. Then, 0.5 parts of a mixture of tetramethoxysilane:dimethyldichlorosilane = 1:1 was added as a coupling agent to perform a coupling reaction for 2 hours.

### (Example 7)

A polymer, a functional layer binder, a functional layer composition, a functional layer-equipped separator, a positive electrode, a negative electrode, and a non-aqueous secondary battery were manufactured as in Example 1, except that: in Steps (i), (ii), and (iv) in preparation of the polymer, polymerization was performed under the reaction conditions at 70°C for 60 minutes, to thereby change the weight average molecular weight of the polymer to 150000.

Then, various measurements and evaluations were performed as in Example 1. Table 1 shows the results thereof.

### (Example 8)

A polymer, a functional layer binder, a functional layer composition, a functional layer-equipped separator, a positive electrode, a negative electrode, and a non-aqueous secondary battery were manufactured as in Example 1, except that: in Steps (i), (ii), and (iv) in preparation of the polymer, polymerization was performed under the reaction conditions at 50°C for 120 minutes, to thereby change the weight average molecular weight of the polymer to 650000.

Then, various measurements and evaluations were performed as in Example 1. Table 1 shows the results thereof.

### (Example 9)

A polymer, a functional layer binder, a functional layer composition, a functional layer-equipped separator, a positive electrode, a negative electrode, and a non-aqueous secondary battery were manufactured as in Example 1, except that, in preparing the functional layer composition, acetone was used as a solvent in place of water.

Then, various measurements and evaluations were performed as in Example 1. Table 1 shows the results thereof.

### (Example 10)

A polymer, a functional layer binder, a functional layer composition, a functional layer-equipped separator, a positive electrode, a negative electrode, and a non-aqueous secondary battery were manufactured as in Example 1, except that, in preparing the functional layer composition, the amount of latex including a polymer (styrene-isoprene-styrene-block copolymer) was changed to 0.4 parts by solid equivalent.

Then, various measurements and evaluations were performed as in Example 1. Table 1 shows the results thereof.

### (Example 11)

A polymer, a functional layer binder, a functional layer composition, a functional layer-equipped separator, a positive electrode, a negative electrode, and a non-aqueous secondary battery were manufactured as in Example 1, except that, in preparing the functional layer composition, the amount of latex including a polymer (styrene-isoprene-styrene-block copolymer) was changed to 15 parts by solid equivalent.

Then, various measurements and evaluations were performed as in Example 1. Table 1 shows the results thereof.

### (Example 12)

A polymer, a functional layer binder, a functional layer composition, a functional layer-equipped separator, a positive electrode, a negative electrode, and a non-aqueous secondary battery were manufactured as in Example 1, except that, in preparing the functional layer composition, boehmite (manufactured by Taimei Chemicals Co., Ltd.; product number: 'C06') was used as inorganic particles in place of α alumina particles.

Then, various measurements and evaluations were performed as in Example 1. Table 1 shows the results thereof.

### (Example 13) [Comparative Example]

A polymer, a functional layer binder, a functional layer composition, a functional layer-equipped separator, a positive electrode, a negative electrode, and a non-aqueous secondary battery were manufactured as in Example 1, except that the functional layer composition was prepared without using inorganic particles.

Then, various measurements and evaluations were performed as in Example 1. Table 1 shows the results thereof.

### (Comparative Example 1)

A polymer, a functional layer binder, a functional layer composition, a functional layer-equipped separator, a positive electrode, a negative electrode, and a non-aqueous secondary battery were manufactured as in Example 1, except that: Step (ii) in preparation of the polymer was performed as described in below such that the diblock content of a consecutive-block region including consecutive blocks of aromatic vinyl monomers and aliphatic conjugated diene monomers in a styrene/butadiene/styrene-block copolymer as the polymer was adjusted to 4%; in Steps (i) and (iv) in preparation of the polymer, polymerization was performed under the reaction conditions at 70°C for 60 minutes, to thereby change the weight average molecular weight of the polymer to 150000; and further in Step (iv) in preparation of the polymer, methacrylate was used as the additional monomer in place of itaconic acid.

Then, various measurements and evaluations were performed as in Example 1. Table 1 shows the results thereof.

### <Preparation of Polymer>

### «Step (ii)»

As the aliphatic conjugated diene monomer, 60 parts of dehydrated isoprene was added and kept stirred at 70°C for 60 minutes to continue polymerization. The polymerization conversion rate at this point was 99%. Then, 0.1 part of a mixture of tetramethoxysilane:dimethyldichlorosilane = 1:1 was added as a coupling agent to perform a coupling reaction for 2 hours.

### (Comparative Example 2)

A polymer, a functional layer binder, a functional layer composition, a functional layer-equipped separator, a positive electrode, a negative electrode, and a non-aqueous secondary battery were manufactured as in Example 1, except that: Step (ii) in preparation of the polymer was performed as described in below such that the diblock content of a consecutive-block region including consecutive blocks of aromatic vinyl monomers and aliphatic conjugated diene monomers in a styrene/butadiene/styrene-block copolymer as a polymer was adjusted to 90%; in Steps (i) and (iv) in preparation of the polymer, polymerization was performed under the reaction conditions at 70°C for 60 minutes, to thereby change the weight average molecular weight of the polymer to 150000; and further in Step (iv) in preparation of the polymer, methacrylate was used as the additional monomer in place of itaconic acid.

Then, various measurements and evaluations were performed as in Example 1. Table 1 shows the results thereof.

### <Preparation of Polymer>

### «Step (ii)»

As the aliphatic conjugated diene monomer, 60 parts of dehydrated isoprene was added and kept stirred at 70°C for 30 minutes to continue polymerization. The polymerization conversion rate at this point was 99%. Then, 0.1 part of a mixture of tetramethoxysilane:dimethyldichlorosilane = 1:1 was added as a coupling agent to perform a coupling reaction for 2 hours.

In Table 1 below:
"ST" indicates styrene monomer unit;
"IP" indicates isoprene monomer unit;
"BD" indicates 1,3-butadiene monomer unit;
"BA" indicates n-butyl acrylate monomer unit;
"IA" indicates itaconic acid monomer unit; and
"MAA" indicates methacrylic acid monomer unit.

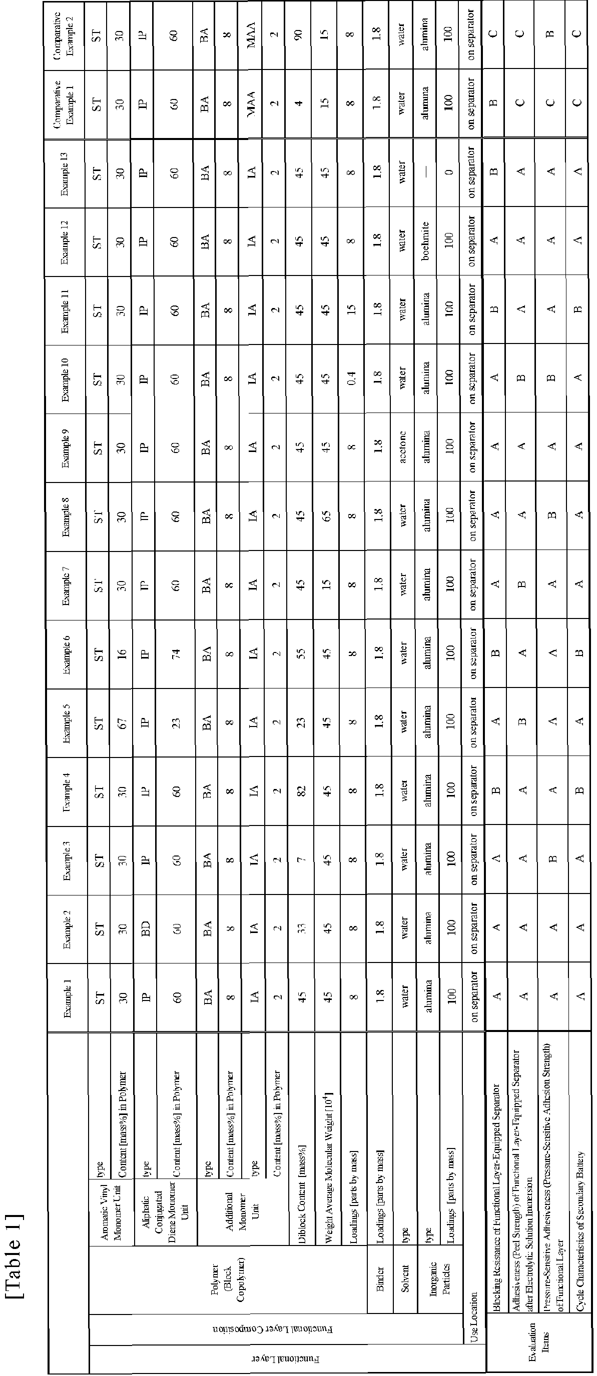

As seen from Table 1, Examples 1-13 (Example 13 being a comparative Example without inorganic particles) each including a polymer and a solvent, the polymer being a block copolymer containing an aromatic vinyl monomer unit and an aliphatic conjugated diene monomer unit, the polymer having a diblock content of 5 mass% or more and 85 mass% or less, are excellent in blocking resistance, pressure-sensitive adhesiveness between the battery members via the non-aqueous secondary battery functional layer, and excellent in cycle characteristics of the secondary battery, as compared with Comparative Examples 1-2 in which the polymer has a diblock content falling below or above the aforementioned predetermined range.

### INDUSTRIAL APPLICABILITY

As disclosed herein, a composition for non-aqueous secondary battery functional layer capable of achieving both excellent pressure-sensitive adhesiveness and blocking resistance, as well as imparting the non-aqueous secondary battery with excellent cycle characteristics is provided.

As disclosed herein, a functional layer for a non-aqueous secondary battery capable of achieving both excellent pressure-sensitive adhesiveness and blocking resistance, as well as imparting the non-aqueous secondary battery with excellent cycle characteristics is also provided.

Further, as disclosed herein, a non-aqueous secondary battery having excellent cycle characteristics and a method of manufacturing anon-aqueous secondary battery capable of manufacturing the secondary battery are provided.

## Claims

1. A composition for a non-aqueous secondary battery functional layer, the composition comprising: a polymer; inorganic particles; and a solvent, wherein:
the polymer is a block copolymer including an aromatic vinyl monomer unit and an aliphatic conjugated diene monomer unit; and
the polymer has a diblock content of 5 mass% or more and 85 mass% or less,
wherein the diblock content is measured as disclosed in the description.

2. The composition for a non-aqueous secondary battery functional layer according to claim 1, wherein the polymer contains the aromatic vinyl monomer units in a proportion of 10 mass% or more and 70 mass% or less.

3. The composition for a non-aqueous secondary battery functional layer according to claim 1 or 2, wherein the polymer contains the aliphatic conjugated diene monomer units in a proportion of 20 mass% or more and 80 mass% or less.

4. The composition for a non-aqueous secondary battery functional layer according to any one of claims 1 to 3, wherein the polymer has a weight average molecular weight of 10 × 10⁴ or more and 100 × 10⁴ or less, wherein the weight average molecular weight is measured as disclosed in the description.

5. A non-aqueous secondary battery functional layer formed by using the composition for a non-aqueous secondary battery functional layer according to any one of claims 1 to 4.

6. A non-aqueous secondary battery comprising the non-aqueous secondary battery functional layer according to claim 5.

7. The non-aqueous secondary battery according to claim 6, comprising a positive electrode, a negative electrode, a separator, and an electrolyte solution, wherein
at least one of the positive electrode, the negative electrode, and the separator is equipped with the non-aqueous secondary battery functional layer.

8. A method of manufacturing the non-aqueous secondary battery according to claim 7, comprising the steps of:
laminating at least two of the positive electrode, negative electrode, and separator via the functional layer for a non-aqueous secondary battery to obtain a laminate; and
pressurizing the laminate.

9. The method according to claim 8, further comprising the step of applying the non-aqueous secondary battery functional layer on a surface of the separator to form a functional layer-equipped separator, wherein
the step of laminating comprises laminating the functional layer-equipped separator and the positive electrode, and/or the functional layer-equipped separator and the negative electrode, via the non-aqueous secondary battery functional layer.

10. The method according to claim 8 or 9, further comprising the step of heating the laminate, wherein
the step of heating is performed simultaneously with the step of pressurizing and/or after the step of pressurizing.

## Patentansprüche

1. Eine Zusammensetzung für eine Funktionsschicht für eine nicht-wässrige Sekundärbatterie, die Zusammensetzung umfassend: ein Polymer; anorganische Partikel; und ein Lösemittel, wobei:
das Polymer ein Block-Copolymer ist, umfassend eine aromatische Vinyl-Monomereinheit und eine aliphatische konjugierte Dien-Monomereinheit;
und
das Polymer einen Diblock-Gehalt von 5 Gew.-% oder höher und 85 Gew.-% oder niedriger hat,
wobei der Diblock-Gehalt wie in der Beschreibung beschrieben gemessen wird.

2. Die Zusammensetzung für eine Funktionsschicht für eine nicht-wässrige Sekundärbatterie gemäß Anspruch 1, wobei das Polymer die aromatischen Vinyl-Monomereinheiten mit einem Anteil von 10 Gew.-% oder höher und 70 Gew.-% oder niedriger enthält.

3. Die Zusammensetzung für eine Funktionsschicht für eine nicht-wässrige Sekundärbatterie gemäß Anspruch 1 oder 2, wobei das Polymer die aliphatischen konjugierten Dien-Monomereinheiten mit einem Anteil von 20 Gew.-% oder höher und 80 Gew.-% oder niedriger enthält.

4. Die Zusammensetzung für eine Funktionsschicht für eine nicht-wässrige Sekundärbatterie gemäß irgendeinem der Ansprüche 1 bis 3, wobei das Polymer ein gewichtsgemitteltes Molekulargewicht von 10 × 10⁴ oder höher und 100 × 10⁴ oder niedriger hat, wobei das gewichtsgemittelte Molekulargewicht wie in der Beschreibung beschrieben gemessen wird.

5. Eine Funktionsschicht für eine nicht-wässrige Sekundärbatterie, hergestellt unter Verwendung der Zusammensetzung für eine Funktionsschicht für eine nicht-wässrige Sekundärbatterie gemäß irgendeinem der Ansprüche 1 bis 4.

6. Eine nicht-wässrige Sekundärbatterie umfassend die Funktionsschicht für eine nicht-wässrige Sekundärbatterie gemäß Anspruch 5.

7. Die nicht-wässrige Sekundärbatterie gemäß Anspruch 6, umfassend eine positive Elektrode, eine negative Elektrode, einen Separator, und eine Elektrolytlösung, wobei
wenigstens eins von der positiven Elektrode, der negativen Elektrode und dem Separator mit der Funktionsschicht für eine nicht-wässrige Sekundärbatterie ausgerüstet ist.

8. Ein Verfahren zur Herstellung der nicht-wässrigen Sekundärbatterie gemäß Anspruch 7, umfassend die Schritte:
Laminieren von wenigstens zwei von der positiven Elektrode, der negativen Elektrode und dem Separator mittels der Funktionsschicht für eine nicht-wässrige Sekundärbatterie, um ein Laminat zu erzeugen; und
Pressen des Laminats.

9. Das Verfahren gemäß Anspruch 8, außerdem umfassend den Schritt: Aufbringen der Funktionsschicht für eine nicht-wässrige Sekundärbatterie auf eine Oberfläche des Separators, um einen mit einer Funktionsschicht ausgerüsteten Separator zu erzeugen, wobei
der Schritt des Laminierens umfasst: Laminieren des mit einer Funktionsschicht ausgerüsteten Separators und der positiven Elektrode, und/oder des mit einer Funktionsschicht ausgerüsteten Separators und der negativen Elektrode, mittels der Funktionsschicht für eine nicht-wässrige Sekundärbatterie.

10. Das Verfahren gemäß Anspruch 8 oder 9, außerdem umfassend den Schritt: Erhitzen des Laminats, wobei
der Schritt des Erhitzens gleichzeitig mit dem Schritt des Pressens und/oder nach dem Schritt des Pressens durchgeführt wird.

## Revendications

1. Composition pour une couche fonctionnelle de batterie rechargeable non aqueuse, la composition comprenant : un polymère ; des particules inorganiques ; et un solvant, dans laquelle :
le polymère est un copolymère séquencé contenant un motif monomère vinyle aromatique et un motif monomère diène conjugué aliphatique ; et
le polymère a une teneur en diblocs de 5 % en masse ou plus et 85 % en masse ou moins,
dans laquelle la teneur en diblocs est mesurée comme divulgué dans la description.

2. Composition pour une couche fonctionnelle de batterie rechargeable non aqueuse selon la revendication 1, dans laquelle le polymère contient les motifs monomères vinyle aromatiques en une proportion de 10 % en masse ou plus et 70 % en masse ou moins.

3. Composition pour une couche fonctionnelle de batterie rechargeable non aqueuse selon la revendication 1 ou 2, dans laquelle le polymère contient les motifs monomères diènes conjugués aliphatiques en une proportion de 20 % en masse ou plus et 80 % en masse ou moins.

4. Composition pour une couche fonctionnelle de batterie rechargeable non aqueuse selon l'une quelconque des revendications 1 à 3, dans laquelle le polymère a une masse moléculaire moyenne en masse de 10 x 10⁴ ou plus et 100 × 10⁴ ou moins, dans laquelle la masse moléculaire moyenne en masse est mesurée comme divulgué dans la description.

5. Couche fonctionnelle de batterie rechargeable non aqueuse formée par utilisation de la composition pour une couche fonctionnelle de batterie rechargeable non aqueuse selon l'une quelconque des revendications 1 à 4.

6. Batterie rechargeable non aqueuse comprenant la couche fonctionnelle de batterie rechargeable non aqueuse selon la revendication 5.

7. Batterie rechargeable non aqueuse selon la revendication 6, comprenant une électrode positive, une électrode négative, un séparateur, et une solution d'électrolyte, dans laquelle
au moins l'un parmi l'électrode positive, l'électrode négative, et le séparateur, est équipé de la couche fonctionnelle de batterie rechargeable non aqueuse.

8. Procédé de fabrication de la batterie rechargeable non aqueuse selon la revendication 7, comprenant les étapes de :
stratification d'au moins deux parmi l'électrode positive, l'électrode négative, et le séparateur, via la couche fonctionnelle pour une batterie rechargeable non aqueuse, pour que soit obtenu un stratifié ; et
pressurisation du stratifié.

9. Procédé selon la revendication 8, comprenant en outre l'étape d'application de la couche fonctionnelle de batterie rechargeable non aqueuse sur une surface du séparateur pour former un séparateur équipé d'une couche fonctionnelle, dans lequel
l'étape de stratification comprend la stratification du séparateur équipé de la couche fonctionnelle et de l'électrode positive, et/ou du séparateur équipé de la couche fonctionnelle et de l'électrode négative, via la couche fonctionnelle de batterie rechargeable non aqueuse.

10. Procédé selon la revendication 8 ou 9, comprenant en outre l'étape de chauffage du stratifié, dans lequel
l'étape de chauffage est effectuée en même temps que l'étape de pressurisation et/ou après l'étape de pressurisation.
